(19) **Europäisches Patentamt / European Patent Office / Office européen des brevets**

(11) **EP 4 012 624 A1**

(12) **EUROPEAN PATENT APPLICATION**

(43) Date of publication:
**15.06.2022 Bulletin 2022/24**

(51) International Patent Classification (IPC):
**G06N 3/08** *(2006.01)* **G06N 3/063** *(2006.01)*

(21) Application number: **20213178.5**

(52) Cooperative Patent Classification (CPC):
**G06N 3/084;** G06N 3/063

(22) Date of filing: **10.12.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **TOYOTA JIDOSHA KABUSHIKI KAISHA Aichi-ken, 471-8571 (JP)**
• **ETH Zurich - The Swiss Federal Institute of Technology Zurich 8092 Zurich (CH)**

(72) Inventors:
• **ABBELOOS, Wim 1140 BRUSSELS (BE)**
• **OBUKHOV, Anton CH-8092 ZURICH (CH)**
• **RAKHUBA, Maksim CH-8092 ZURICH (CH)**
• **HUANG, Zhiwu CH-8092 ZURICH (CH)**
• **GEORGOULIS, Stamatios CH-8092 ZURICH (CH)**
• **DAI, Dengxin CH-8092 ZURICH (CH)**
• **VAN GOOL, Luc CH-8092 ZURICH (CH)**

(74) Representative: **Cabinet Beau de Loménie 158, rue de l'Université 75340 Paris Cedex 07 (FR)**

Remarks:
Amended claims in accordance with Rule 137(2) EPC.

(54) **EFFICIENT AND STABLE TRAINING OF A NEURAL NETWORK IN COMPRESSED FORM**

(57) A computer-implemented method for training a neural network in compressed form, comprising: obtaining a network template of the neural network; selecting a rank and a parameterization type for a first layer of the neural network, the first layer being associated with a first weight matrix of shape $m \times n$, and the selected rank r being less than or equal to the smallest of m and $n$; determining a parameterization of the neural network based on the network template and the selected rank and parameterization type for the first layer of the neural network, wherein the determined parameterization identifies learned parameters for parameterizing the first layer of the neural network; instantiating and initializing the learned parameters in memory; and training the neural network, including updating the values of the learned parameters that parameterize the first layer of the neural network.

FIG.3

**Description**

Field of the disclosure

The present disclosure relates to the field of training neural networks in compressed form.

Description of Related Art

Today, neural networks are being used in an ever-increasing fashion in various applications, ranging from computer vision to natural language processing.

As neural networks evolve to solve even more complex problems, they are also growing in complexity, in terms of depth (number of layers), number of learned parameters, and computational requirements. For example, the ResNet-101 model is a convolutional neural network with 44 million parameters and requires 171 MB of storage. The scale of such networks hinders their usage in environments with low storage and computational power.

Reducing the size of neural networks is thus today the focus of various research. Notably, the research investigates how to reduce the size of a neural network (i.e., compress the network), the amount of memory used during inference, and the amount of computations required to produce the output, while limiting the impact of such a reduction on the performance of the network.

From another aspect, it is crucial to ensure that the resulting compressed network represents a stable model for training. Training instability is a known problem in the field of neural networks. It can be described as the high sensitivity of the training process to the choice of hyperparameters, coupled with the neural network's failure to satisfy the training objective for most conventional choices of hyperparameters. For example, a known training instability condition is when model parameters receive noisy or high variance updates during training. This condition may result in degenerate models with poor performance at inference.

In "Ultimate tensorization: compressing convolutional and FC layers alike, arXiv:1611.03214, 2016," Garipov *et al.* describe a compression technique for convolutional neural networks based on the Tensor Train Decomposition. However, the work neglects to account for the compressed network's spectral properties, and by consequence, the impact on training stability.

Zhang et al. in "Stabilizing Gradients for Deep Neural Networks via Efficient SVD Parameterization, arXiv:1803.09327, 2018" describe a SVD parameterization technique, in the context of recurrent neural networks (RNNs). However, Zhang's technique uses a full-rank SVD parameterization, and does not explore the compression aspect of trained models.

Summary

The present disclosure overcomes one or more deficiencies of the prior art by proposing a computer-implemented method for training a neural network in compressed form, comprising:

obtaining a network template of the neural network;
selecting a rank and a parameterization type for a first layer of the neural network, the first layer being associated with a first weight matrix of shape m × n, and the selected rank r being less than or equal to the smallest of m and n;
determining a parameterization of the neural network based on the network template and the selected rank and parameterization type for the first layer of the neural network, wherein the determined parameterization identifies learned parameters for parameterizing the first layer of the neural network;
instantiating and initializing the learned parameters in memory; and
training the neural network, including updating the values of the learned parameters that parameterize the first layer of the neural network.

As such, it is the set of parameters underlying the parameterization of the neural network that is updated during training. Because the set of parameters represent a low-rank parameterization of the first layer, the amount of independently learned parameters that need to be trained and updated is reduced. This improves training stability, reduces storage and inference memory footprints, and reduces the amount of operations during inference.

In an embodiment, determining the parameterization of the neural network comprises deriving parameterization configurations of components resulting from an SVD decomposition of the first weight matrix of the first layer of the neural network, said parameterization configurations comprising orthogonal parameterizations of first and second orthogonal matrices and a parameterization configuration of a diagonal matrix of singular values, the first and second orthogonal matrices and the diagonal matrix resulting from the SVD decomposition of the first layer.

The orthogonality of the parameterizations of the first and second orthogonal matrices ensures that the resulting parameterization configurations of the first and second orthogonal matrices do not adversely impact the spectral properties of the compressed version of the first weight matrix, and that the spectrum of the first weight matrix is defined exclusively by the diagonal matrix of singular values. This control of the spectral properties of the parameterized first weight matrix enhances training stability of the neural network.

In an embodiment, the singular values of the diagonal matrix are constrained by the range [-C, C] in the parameterization configuration of the diagonal matrix, where C is a positive constant. This constrains the spectrum of the first weight matrix and improves the training stability of the neural network.

In an embodiment, the orthogonal parameterizations of the first and second orthogonal matrices are full-space orthogonal parameterizations.

In an embodiment, the full-space orthogonal parameterizations of the first and second orthogonal matrices are Householder parameterizations of the first and second orthogonal matrices.

In an embodiment, the method further comprises:

  receiving the shape of the first/second orthogonal matrix; and
  deriving a full-space orthogonal parameterization of the first/second orthogonal matrix.

In an embodiment, the orthogonal parameterizations of the first and second orthogonal matrices are subspace orthogonal parameterizations.

In an embodiment, the subspace orthogonal parameterizations of the first and second orthogonal matrices are Tensor Train Decomposition (TTD) parameterizations of the first and second orthogonal matrices.

In an embodiment, the method further comprises:

  receiving the shape of the first/second orthogonal matrix;
  deriving a shape of a tensor based on the shape of the first/second orthogonal matrix;
  deriving a list of ranks of a TTD of the tensor;
  deriving a list of shapes of TT-cores representing the tensor based on the ranks;
  computing a list of shapes of matricized TT-cores; and
  performing a full-space orthogonal parameterization of each shape from the list of shapes of the matricized TT-cores to obtain the TTD parameterization of the first/second orthogonal matrix.

In an embodiment, training the neural network comprises:

  obtaining a data sample from a dataset, the data sample including an input and an expected output of the neural network;
  computing a predicted output by applying the neural network, as parameterized by the determined parameterization, to the data sample;
  computing a loss as a discrepancy function of the expected output and the predicted output;
  computing loss gradients based on the computed loss, wherein said computing comprises computing loss gradients with respect to the learned parameters of the first layer of the neural network; and
  updating the learned parameters of the first layer using the loss gradients computed with respect to the learned parameters of the first layer.

In an embodiment, computing the predicted output comprises:

  reading the parameterization configurations of the first and second orthogonal matrices and of the diagonal matrix; and
  executing a function expression associated with each of the parameterization configurations to obtain a plurality of orthogonal matrices and the diagonal matrix.

In an embodiment, where the obtained plurality of orthogonal matrices corresponds to the first and second orthogonal matrices, the method comprises:

  decompressing the first weight matrix of the first layer according to $W_1 = U_1 S_1 V_1^\top$, where $W_1$ denotes the first weight matrix, $U_1$ and $V_1$ denote the obtained first and second orthogonal matrices, and $S_1$ denotes the obtained diagonal matrix; and
  computing a mapping of the first layer as $y_1 = W_1 x_1 + b_1$ where $x_1$ denotes the input of the first layer based on the applied data sample and $b_1$ denotes a bias vector associated with the first layer.

In an embodiment, where the obtained plurality of orthogonal matrices correspond to the first and second orthogonal matrices, the method comprises:

computing a mapping of the first layer as $y_1 = U_1\big(S_1(V_1^{\mathsf{T}} x_1)\big) + b_1,$ where $U_1$ and $V_1$ denote the obtained first and second orthogonal matrices, and $S_1$ denotes the obtained diagonal matrix, $x_1$ denotes the input of the first layer based on the applied data sample, and $b_1$ denotes a bias vector associated with the first layer.

In an embodiment, where the obtained plurality of orthogonal matrices correspond to matricized TT-cores of a Tensor Train Decomposition (TTD) of the first and second orthogonal matrices, the method comprises:

reshaping the plurality of orthogonal matrices into three-dimensional TT-cores according to the parameterization configurations of the first layer;
constructing a tensor network based on the first diagonal matrix $S_1$ and the plurality of orthogonal matrices;
contracting the tensor network to obtain the first weight matrix; and
computing a mapping of the first layer as $y_1 = W_1 x_1 + b_1$, where $W_1$ denotes the first weight matrix, $x_1$ denotes the input of the first layer based on the applied data sample, and $b_1$ denotes a bias vector associated with the layer.

In an embodiment, where the obtained plurality of orthogonal matrices correspond to matricized TT-cores of a Tensor Train Decomposition (TTD) of the first and second orthogonal matrices, the method comprises:

reshaping the plurality of orthogonal matrices into three-dimensional TT-cores according to the parameterization configurations of the first layer;
tensorizing input vector $x_1$ of the first into a tensor $x'_1$ of shape $n_1 \times \cdots \times n_2 \times n_1$ according to the parameterization configurations of the first layer;
constructing a tensor network based on the diagonal matrix, the TT-cores, and the tensor $x'_1$;
contracting the tensor network to obtain a tensorized product $y'_1 = W'_1 x'_1$ of shape $m_1 \times m_2 \times \cdots \times m_k$ and vectorizing the tensorized product to obtain a vector $\tilde{y}_1$ with shape $m \times 1$; and
computing a mapping of the first layer as $y_1 = \tilde{y}_1 + b_1$, where $b_1$ denotes a bias vector associated with the first layer.

In another aspect, the present disclosure proposes a system for training a neural network in compressed form. The system may be configured to perform any of the above-described method embodiments of the present disclosure.

In an embodiment, any of the above-described method embodiments may be implemented as instructions of a computer program. As such, the present disclosure provides a computer program including instructions that when executed by a processor cause the processor to execute a method according to any of the above-described method embodiments.

The computer program can use any programming language and may take the form of a source code, an object code, or a code intermediate between a source code and an object code, such as a partially compiled code, or any other desirable form.

The computer program may be recorded on a computer-readable medium. As such, the present disclosure is also directed to a computer-readable medium having recorded thereon a computer program as described above. The computer-readable medium can be any entity or device capable of storing the computer program.

Brief description of the drawings

Further features and advantages of the present disclosure will become apparent from the following description of certain embodiments thereof, given by way of illustration only, not limitation, with reference to the accompanying drawings in which:

FIG. 1 illustrates an example system according to an embodiment of the present disclosure;
FIG. 2 illustrates an example computer implementation of the system of FIG. 1;
FIG. 3 illustrates an example process for training a neural network in compressed form according to an embodiment of the present disclosure;
FIGs. 4A-4C illustrate example parameterization configuration processes according to embodiments of the present disclosure;
FIG. 5 illustrates an example layout of the learned parameters of a Householder transformation in memory, which may be part of the parameterization configuration of a single or a batch of orthogonal matrices, according to an embodiment of the present disclosure;

FIG. 6 illustrates an example layout of the learned parameters of a Padded Householder transformation in memory, which may be part of the parameterization configuration of a single or a batch of orthogonal matrices, according to an embodiment of the present disclosure;

FIG. 7A illustrates an example process for training a neural network according to an embodiment of the present disclosure;

FIG. 7B illustrates an example process for using a neural network during inference according to an embodiment of the present disclosure;

FIGs. 8A-8G illustrate example processes for computing the mapping of a layer of the neural network according to an embodiment of the present disclosure.

Description of embodiments

In the following disclosure, the term 'learned parameters' denotes an ordered collection of variables used to define (or represent) a function ('mapping'). The function may be implementing a neural network layer. For example, a linear layer is characterized by a function $y = Wx + b$, where $x$ is the layer's input vector of shape $n \times 1$, y is the layer's output vector of shape $m \times 1$. In turn, $W$ and $b$ are the parameterized entities' - the weight matrix of shape $m \times n$ and the bias vector of shape $m \times 1$, respectively, which need to be known to compute y given x. Here, the weight matrix $W$ may be represented ('parameterized') by a list of its scalar elements $\{W_{1,1}, W_{1,2},..., W_{1,n}, ... , W_{m,1}, W_{m,2}, ..., W_{m,n}\}$, a total of $mn$ learned parameters. Alternatively, the weight matrix W may have a rank-1 representation such as $W = pq^T$, where $p, q$ are vectors of shapes $m \times 1$ and $n \times 1$ respectively. As such, it may be represented through the collection of scalar elements of each of $p$ and $\{p_1(..., p_m, q_1, ..., q_n\}$, a total of $m + n$ learned parameters.

The term parameterization configuration' is used to denote a specific arrangement of the learned parameters (of a function) into one or more higher-order structures. The higher-order structures may be vectors, matrices, or multi-dimensional arrays. In addition to the arrangement, the parameterization configuration may also include a function expression for computing parameterized entities (such as the weight matrix $W$) from the learned parameters. The function expression may be represented using instructions, an algorithm, or a computer program, for example. In the first example, in which the matrix $W$ is parameterized by the list of its $mn$ scalar elements, the parameterization configuration of matrix $W$ may contain instructions about the arrangement of the list of $mn$ scalar elements into a 2-dimensional array of the shape $m \times n$, to form the parameterized entity (matrix $W$). In the second example, in which the matrix $W$ is parameterized by a list of $m + n$ learned parameters, the parameterization configuration of matrix $W$ may contain instructions about the arrangement of the list of $m + n$ scalar elements into two vectors of shapes $m \times 1$ and $n \times 1$, denoted as $p$ and $q$ respectively, as well as instructions about obtaining the parameterized entity (matrix $W$) from these vectors, which corresponds to the function expression (algorithm, computer program) $W = pq^T$.

The terms 'optimization process' and 'training' are used interchangeably to denote the process of (direct or indirect, single or repetitive) changing (updating) the values of learned parameters, used to parameterize a model, such as a neural network. The resulting model may improve as a result of this process, as evaluated by some metric.

The term 'network template' is used to denote a neural network architecture. The network template comprises exhaustive properties of all layers of the neural network, such as, for each layer, the layer type, numbers of input and output features, and connections with other layers. Without loss of generality, the network template layers are linear layers, convolutions, or transposed convolutions. The network template may or may not include pre-trained weights: the values of all its layers learned parameters, such as weight matrices and biases.

The terms 'tensor', 'multi-dimensional array', and '$N$-dimensional array' are used interchangeably.

The indexing notation that is used to address elements of an $N$-dimensional array $A \in \mathbb{R}^{d_1 \times d_2 \times \cdots \times d_N}$ (a vector if $N = 1$, a matrix if $N = 2$) is defined as follows: $A(i_1, i_2, ..., i_N)$, where indices $1 \leq i_1 \leq d_1, ..., 1 \leq i_N \leq d_N$.

The order of elements in an $N$-dimensional array $A \in \mathbb{R}^{d_1 \times d_2 \times \cdots \times d_N}$ is defined by assigning each element $A(i_1, i_2, ..., i_N)$ a single integer multi-index denoted as $\overline{i_1 ... i_N}$ equal to $1 + \sum_{p=1}^{N}\left(i_p - 1\right)\prod_{q=p+1}^{N} d_q.$ Thus, each element of the tensor is uniquely identified with the multi-index taking values in the range $1 \leq \overline{i_1 ... i_N} \leq \prod_{p=1}^{N} d_p.$

The process of order-preserving rearranging elements of a tensor or a matrix into a vector is referred to herein as 'vectorization'.

The process of order-preserving rearranging elements of a tensor or a vector into a matrix is referred to herein as 'matricization'.

The process of order-preserving rearranging elements of a vector or a matrix into a tensor is referred to herein as 'tensorization'.

The term 'orthogonal matrix' is used to denote a thin matrix $A \in \mathbb{R}^{d \times r}$, $d \geq r$, with the number of rows greater or equal to the number of columns, which satisfies $A^{\mathsf{T}}A = I_r$, where $I_r$ is the identity matrix of shape $r \times r$. This term is equivalent to the '(thin) semi-orthogonal matrix', '(thin) orthonormal frame', and '(thin) Stiefel frame' terms seen in prior art.

The term 'orthogonal parameterization' is used to describe a parameterization configuration representing a single orthogonal matrix of a given shape. The term 'full-space orthogonal parameterization' denotes an orthogonal parameterization of an orthogonal matrix obtained from the full-space of all possible orthogonal matrices of a given shape (also known as the Stiefel manifold in the prior art). The term 'subspace orthogonal parameterization' denotes an orthogonal parameterization of an orthogonal matrix from a subspace of the Stiefel manifold (meaning that not every possible orthogonal matrix can have such parameterization). When neither 'subspace' nor 'full-space' qualifiers are specified in the context of an orthogonal parameterization, 'full-space' should be assumed hereinafter.

The term 'orthogonal transformation' is used to denote the function expression (instructions, algorithm, computer program) associated with the orthogonal parameterization, that is, the process of computing the values of an orthogonal matrix from the values of the learned parameters. The orthogonal transformation may be a Householder transformation, Givens rotations, a matrix exponential transformation, a Cayley transform, or any other suitable transformation known to a person of skill in the art.

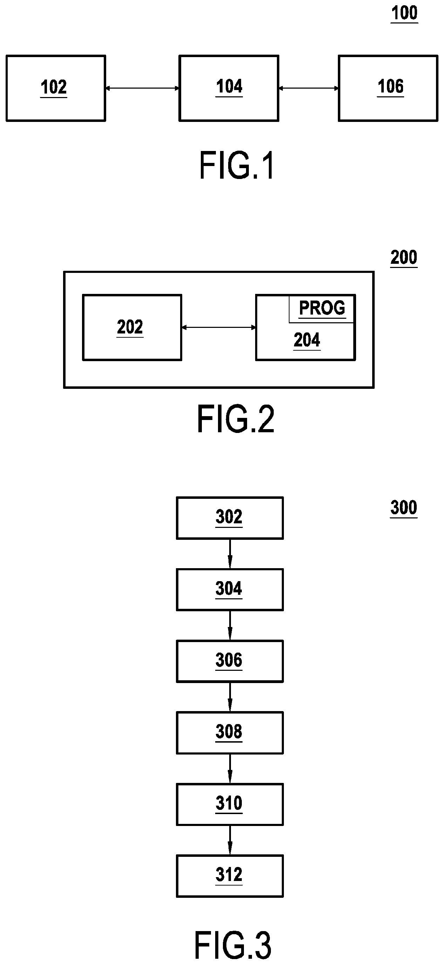

FIG. 1 illustrates an example system 100 for training a neural network in compressed form according to an embodiment of the present disclosure. The example system 100 is provided for the purpose of illustration and not limitation of embodiments of the present disclosure.

As shown in FIG. 1, example system 100 includes a parameterization configuration module 102, a memory 104, and a training module 106.

In an embodiment, parameterization configuration module 102 is configured to receive as input a network template of a neural network and selections of a rank and a parameterization type for at least one layer of the neural network. Module 102 is configured to derive a parameterization of the neural network in memory 104. The parametrization of the neural network may include a parameterization configuration of a component (e.g., the weight matrix) of at least one layer of the neural network.

In another embodiment, the parametrization of the neural network may further include instructions about batch processing of components across layers of the neural network.

Training module 106 is configured, after the parameterization of the neural network has been derived in memory 104, to instantiate, initialize, and train the neural network based on the derived parameterization. As such, it is the learned parameters, instantiated according to the derived parameterization, that are updated during training.

In an embodiment, system 100 may be implemented on a computer system such as computer system 200 shown in FIG. 2. Specifically, system 100 may be implemented as a computer program including instructions that, when executed by a processor 202 of computer system 200, cause the processor 202 to execute methods or functions of system 100 as described herein. In an embodiment, the computer program may be recorded on a computer-readable medium 204 of computer system 200.

In the following, a detailed operation of system 100 is presented with reference to FIGs. 3-8. For the simplification of presentation where possible, the operation of system 100 is described from the perspective of a single weight matrix $W_1$ of a plurality of weight matrices $W_1,...,W_L$ of a neural network, the processing of the other weight matrices being identical.

FIG. 3 illustrates an example process 300 for training a neural network in compressed form according to an embodiment of the present disclosure. Example process 300 is provided for the purpose of illustration only and is not limiting of embodiments of the present disclosure.

As shown in FIG. 3, the example process 300 begins in step 302, which includes obtaining a network template of a neural network. The neural network may have one or more layers.

Subsequently, step 304 includes selecting a rank and a parameterization type for at least one layer of the neural network. As would be understood by a person of skill in the art based on the teachings herein, where step 304 involves a plurality of layers, step 304 may be performed for each layer independently or jointly for one or more layers of the plurality of layers. The at least one layer may be a single layer, a plurality of layers, or all layers of the neural network.

For simplicity of presentation, the process is described from the perspective of a single layer herein called "the first layer", where possible. In other words, the modifier "first" should not be used to imply that the first layer is the very first input layer of the neural network. Similar notation is used with "the first weight matrix", "the first orthogonal matrix", where the meaning is clear from the context.

In an embodiment, where the first layer is associated with a first weight matrix ($W_1$) of shape $m \times n$, the selected rank $r$ is less than or equal to the smallest of $m$ and $n$. Whereas rank $r$ selected for the first layer is greater than the minimum of $m$ and $n$, its value is taken as the minimum of all $m,n,r$.

In an embodiment, the parameterization type may be one of a first parameterization type and a second parameterization type. However, in other embodiments, the choice between more than two parameterization types can be made.

In an embodiment, the first parameterization type corresponds to a Singular Value Decomposition (SVD) parameterization of the first weight matrix ($W_1$) according to the formula of SVD $(W_1 = U_1 S_1 V_1^\top)$, with full-space orthogonal parameterizations of orthogonal matrices $U_1$ (of shape $m \times r$) and $V_1$ (of shape $n \times r$), and parameterization configuration of a diagonal matrix of singular values $S_1$ (of shape $r \times r$), resulting from SVD of the first weight matrix ($W_1$).

In an embodiment, the second parameterization type corresponds to an SVD parameterization of the first weight matrix ($W_1$) with Tensor Train Decomposition (TTD) parameterizations of the orthogonal matrices resulting from SVD of the first weight matrix ($W_1$).

In an embodiment, the TTD parameterization of a (larger) orthogonal matrix may encapsulate a plurality of full-space orthogonal parameterizations of (smaller) orthogonal matrices, resulting from TTD of the said (larger) orthogonal matrix. A TTD parameterization of an orthogonal matrix is thus seen as a subspace orthogonal parameterization. A detailed description of both types of parameterization is below.

In an embodiment, a Householder transformation may be used as an orthogonal transformation within orthogonal parameterizations. As such, Householder reflectors values may be used as the learned parameters. Such a parameterization configuration is hereinafter referred to as a 'Householder parameterization'.

In another embodiment, subspace orthogonal parametrizations may be used. Subspace orthogonal parameterizations may require custom orthogonal transformations. An example embodiment with TTD parameterization and the corresponding transformation are discussed in relation to processes 400C, 800E, 800F, and 800G.

As further described below, step 304 may include selecting further parameterization options in addition to the parameterization type.

Next, step 306 includes determining a parameterization of the neural network based on the network template and the selected rank and parameterization type for the at least one layer of the neural network.

In an embodiment, step 306 includes deriving parameterization configurations of components of the at least one layer of the neural network. In another embodiment, step 306 further comprises determining instructions about batch processing of said components across layers.

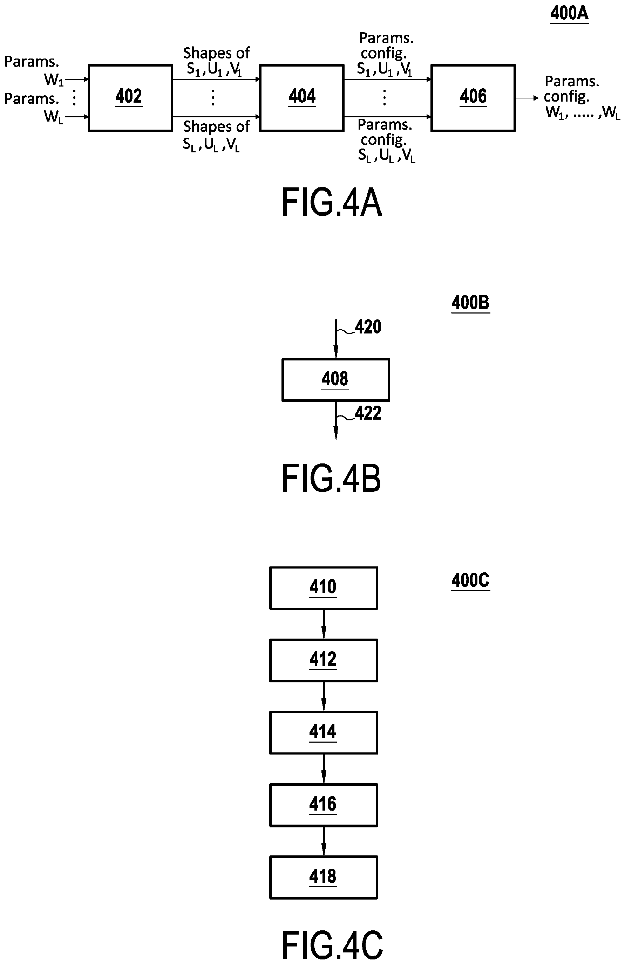

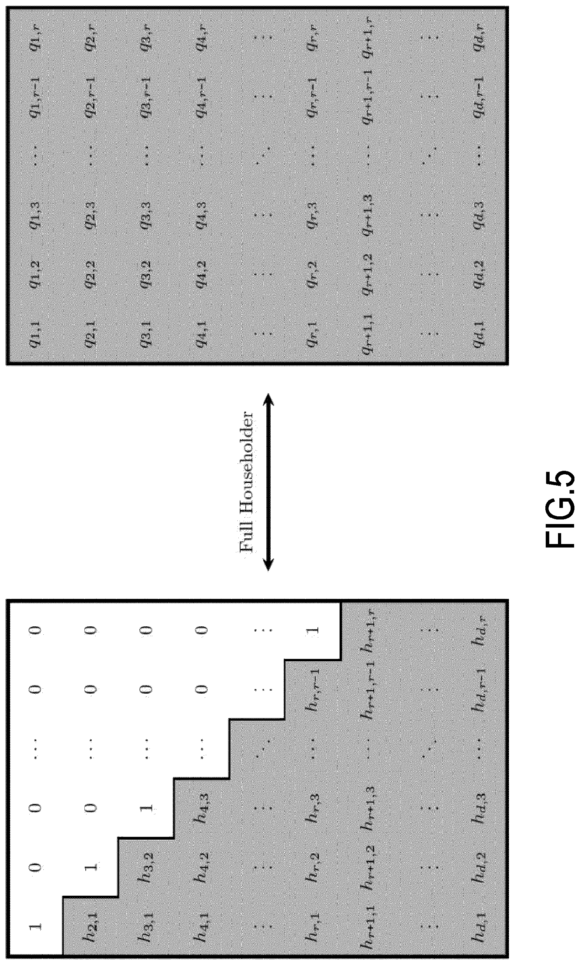

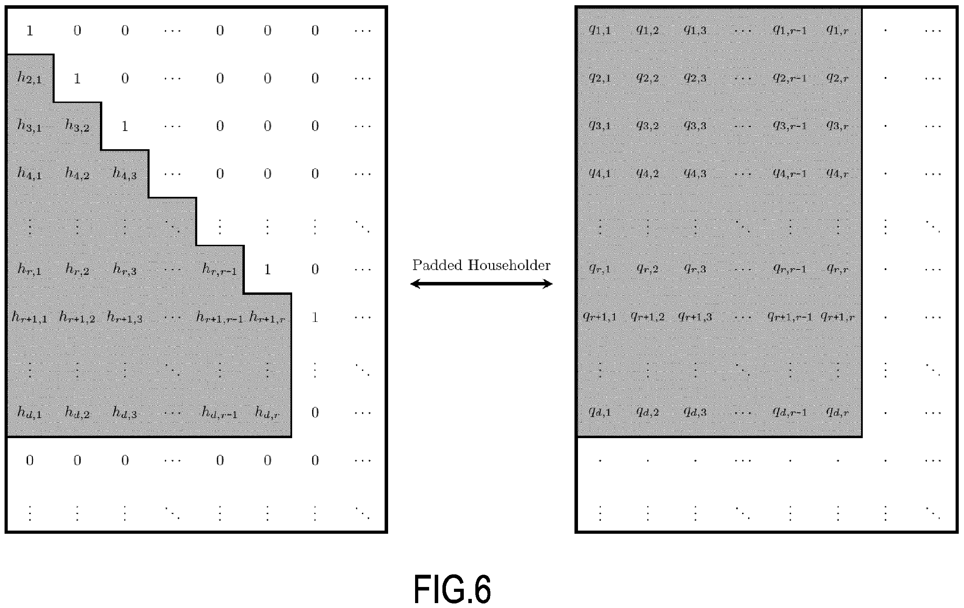

Example embodiments of step 306 are provided further below with respect to processes 400A, 400B, and 400C in FIGs. 4A, 4B, and 4C, respectively. An example embodiment of step 306 using Householder parameterization of orthogonal matrices is further detailed in FIGs. 5 and 6.

The derived parameterization of the neural network identifies the learned parameters, required to parameterize the at least one layer of the neural network. The number of the identified learned parameters is hereinafter denoted as $N$.

Once the parameterization of the neural network is determined, step 308 includes instantiating the identified learned parameters in memory. This may include allocating memory for $N$ scalars and generating data structures for holding the values of the learned parameters.

Then, step 310 includes initializing the learned parameters in memory. This may include assigning an initial value to each parameter in the collection.

In an embodiment, the parameters of a first layer of the neural network may be initialized randomly, from a pre-trained weight matrix of the first layer in an uncompressed network template, or from pre-trained parameter values of the first layer in a compressed network template with a matching parameterization configuration.

If the parameters of the first layer are initialized randomly, step 310 may comprise assigning each parameter of the learned parameters of the first layer a value, consistent with the parameterization configuration of the first layer. The assigned value may be drawn from a respective random distribution. The type and parameters of the random distribution may be identified in step 306.

If the parameters of the first layer are initialized from a pre-trained weight matrix of the first layer in an uncompressed network template, step 310 may include determining parameter values of the first layer by decomposing the pre-trained weight matrix according to the selected rank and parameterization type of the first layer. In an embodiment, this step may include computing a truncated singular value decomposition with rank $r$ over the pre-trained weight matrix $W_1^*$ in order to obtain an approximation of $W_1^* = U_1^* S_1^* V_1^{*\top}$. This step may further include computing initial values of learned parameters of orthogonal parameterizations of orthogonal matrices $U_1^*$ and $V_1^*$. For example, in an embodiment where the first layer is parameterized according to the first parameterization type, with Householder parameterization of orthogonal matrices, this step may include obtaining values of Householder reflectors parameterizing orthogonal matrices $U_1^*$ and $V_1^*$, by means of applying the Householder decomposition algorithm to the matrices $U_1^*$ and $V_1^*$, as further explained in relation to FIG. 5. The existence of a corresponding (first) layer with a pre-trained weight matrix compatible with the parameterization configuration of the first layer is guaranteed by the matching network template.

If the first layer is initialized from pre-trained parameter values of the first layer in a compressed network template with a matching parameterization configuration, step 310 may comprise assigning the learned parameters of the first layer values of corresponding learned parameters of the corresponding (first) layer in the compressed network template. The existence of a corresponding parameter value for each parameter of the learned parameters is guaranteed by the matching parameterization configuration.

Returning to FIG. 3, process 300 terminates in step 312, which includes training of the neural network. This includes updating the values of the learned parameters of the at least one layer of the neural network.

In an embodiment, step 312 may further include updating the values of other parameters associated with the at least one layer, not described by the parameterization configuration. These other parameters may include parameters of bias vectors associated with the at least one layer.

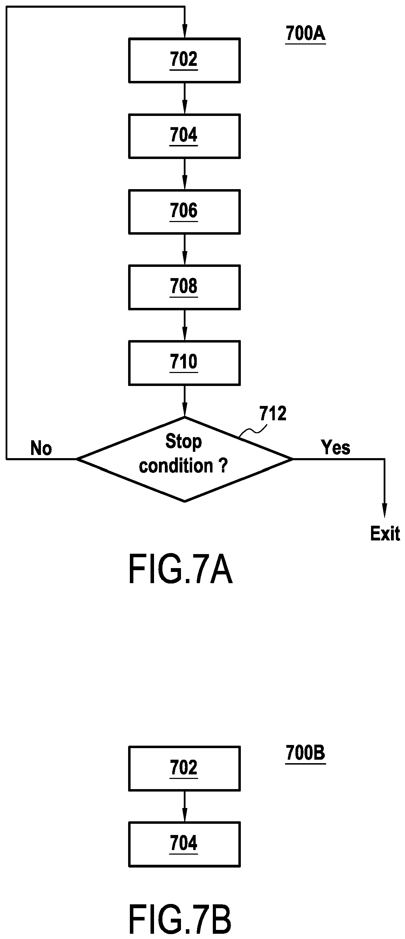

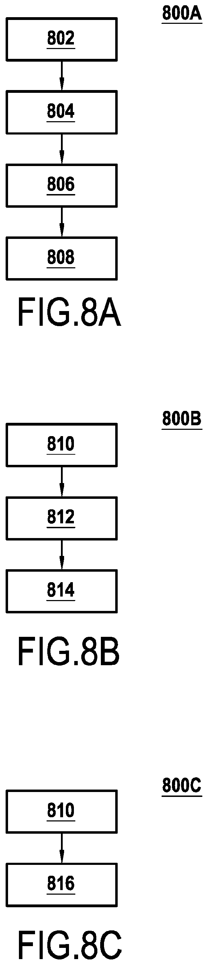

Example processes that may be used during training of the neural network are described further below with reference to FIGs. 7A and 8A-8G. Example processes that may be used in an embodiment with Householder parameterization of orthogonal matrices are described further below with reference to FIGs. 5 and 6.

FIG. 4A illustrates a portion of an example parameterization configuration process 400A according to an embodiment of the present disclosure. Example process 400A is provided for the purpose of illustration and not limitation of embodiments of the present disclosure. Example process 400A may be an embodiment of step 306 of process 300 described above.

In an embodiment, as shown in FIG. 4a, process 400A may be performed using a layer-wise SVD shape determination module 402, a layer-wise parameterization configuration module 404, and a parameterization configurations batching module 406. However, as would be understood by a person of skill in the art based on the teachings herein, embodiments are not limited by this particular implementation.

In an embodiment, process 400A begins with module 402 obtaining from memory (not shown) parameters associated with a plurality of weight matrices $W_1..., W_L$, associated respectively with a plurality of layers of an uncompressed network template. The parameters associated with each weight matrix may include a shape of the weight matrix and a selected rank and a selected parameterization type associated with the layer corresponding to the weight matrix.

The memory from which the parameters are obtained may be a memory for storing the neural network template and may be different from memory for storing learned parameters.

Without limitation, the plurality of layers of the uncompressed network template may include linear layers, convolutions, or transposed convolutions. The neural network may be of any type, including, without limitation, Generative Adversarial Networks (GANs) and Recurrent Neural Networks (RNNs).

Module 402 may process the shapes of the plurality of weight matrices $W_1 ...,W_L$ sequentially or in parallel. Specifically, for the first weight matrix ($W_1$), module 402 derives shapes of each of a first diagonal matrix of singular values ($S_1$), a first orthogonal matrix ($U_1$), and a second orthogonal matrix ($V_1$), arising from SVD parameterization of the first weight matrix ($W_1$) according to the selected rank $r$. $W_1 = U_1 S_1 V_1^{\top}$. Given the shape of the matrix $W_1$ of $m \times n$, and rank $r$, the orthogonal matrices $U_1$ and $V_1$ have shapes $m \times r$ and $n \times r$ respectively, and the diagonal matrix of singular values has a shape $r \times r$.

It is noted that such parameterization through a low-rank decomposition of the first weight matrix $W_1$ may already require less learned parameters even if each of the $S_1$ $U_1$, and $V_1$ matrices use an unstructured elementwise parameterization, in which each of the component matrices' elements is represented through a separate learned parameter. Indeed, such naive SVD parameterization would require $rr + mr + nr = r(r + m + n)$ learned parameters, which may be less than $mn$ for elementwise parameterization of $W_1$, for a certain selection of r much less than m and $n$. As such, SVD parameterization already requires a reduced storage footprint associated with the learned parameters of matrix $W_1$, and the neural network in general, compared with the uncompressed network. Going further, the first and the second types of parameterization of orthogonal matrices $U_1$ and $V_1$ provide another level of compression in terms of the number of learned parameters.

The layer-wise SVD shape determination module 402 derives SVD parameterization configuration of the first weight matrix $W_1$ from matrices $S_1$, $U_1$, and $V_1$, which in turn have their own parameterization configurations. As such, the module 402 stores instructions (algorithm, computer program) for reconstructing matrix $W_1$ according to the formula

$$W_1 = U_1 S_1 V_1^{\top}$$ in memory.

The layer-wise SVD shape determination module 402 provides the derived shapes of matrices $S_1$, $U_1$, $V_1$,...,$S_L$, $U_L$, $V_L$ to the layer-wise parameterization configuration module 404.

The layer-wise parameterization configuration module 404 may process the shapes of the plurality of matrices $S_1$, $U_1$, $V_1$,...,$S_L$, $U_L$, $V_L$ sequentially or in parallel. Specifically, module 404 may determine a parameterization configuration for each of the matrices $S_1$, $U_1$, $V_1$, ..., $S_L$, $U_L$, $V_L$. For simplification, the processing with respect to the matrices obtained from a first weight matrix $W_1$ is described below.

In an embodiment, to increase the training stability of the neural network, the singular values of the first diagonal matrix $S_1$ may be constrained. For example, parameters of the diagonal matrix of singular values $S_1$ may be bounded by the range [-1,1], e.g., by dividing $S_1$ elementwise by the largest absolute value of its elements. The bounding operation is thus appended to the algorithmic (instructions) part of the parameterization configuration of the matrix $S_1$. The insight behind the constraining of the singular values of $S_1$ comes from the knowledge that reducing the sensitivity of a neural network layer mapping (amount of output variation as a function of input variation) can be achieved by constraining the Lipschitz constant associated with the layer, which in turn is defined by the spectrum (singular values) of the weight matrix $W_1$ associated with the layer. It is recalled that the Lipschitz constant of a real-valued function $f$ is the smallest possible value $K$ (if it exists at all) such that for all $x$ and $\Delta x$, the following inequality holds: $|f(x + \Delta x) - f(x)| \leq K|\Delta x|$. The Lipschitz constant (associated with the second vector norm) of a layer with singular values lying in the unit range is less than or equal to one. A sequence of neural network layers can be seen as a superposition of functions, and so if each layer's Lipschitz constant is $K$, then the Lipschitz constant of the superposition of said layers is $K$ raised to the power equal to the number of layers in sequence. It is evident that by applying the proposed constraint on the singular values, the Lipschitz constant associated with the whole sequence of layers is less than or equal to one.

In an embodiment, the parameterization configuration of the first diagonal matrix of singular values $S_1$ of shape $r \times r$ includes arranging $r$ values on the diagonal of a matrix of shape $r \times r$ with zeros in other locations. In an embodiment, the $r$ values on the diagonal of matrix $S_1$ may be learned parameters (termed hereinafter as 'learned spectrum'). In another embodiment, the $r$ values on the diagonal of matrix $S_1$ may be constants, defined either during parameterization configuration step 306, or during initialization step 310 (termed hereinafter a 'fixed spectrum').

In an embodiment with a fixed spectrum of the first layer, the first diagonal matrix of singular values $S_1$ of shape $r \times r$ may be parameterized by 0 learned parameters, and the algorithmic (instructions) part of the parameterization would always produce a matrix of shape $r \times r$ with constants on the diagonal, for example, the identity matrix $I_r$.

In an embodiment with a learned spectrum of the first layer, the first diagonal matrix of singular values $S_1$ of shape $r \times r$ may be parameterized by $r$ learned parameters, corresponding to the singular values, arranged on the diagonal of the matrix $S_1$. The operation of arranging the $r$ learned parameters into a diagonal matrix of shape $r \times r$ is the algorithmic (instructions) part of the parameterization configuration of matrix $S_1$.

In an embodiment, the first orthogonal matrices $U_1$ and $V_1$ may be parameterized with the strict constraint that the resulting parameterizations remain orthogonal during the training process. The strict orthogonality requirement ensures that the resulting parameterizations of $U_1$ and $V_1$ do not adversely impact the spectral properties of the compressed version of the first layer weight matrix $W_1$, and that the spectrum of $W_1$ is defined exclusively by the diagonal matrix of singular values $S_1$. The strict orthogonality constraint of a collection of matrices may be achieved by utilizing orthogonal parameterization of the said collection of orthogonal matrices.

In an embodiment with the first layer parameterized according to the first parameterization type, the parameterization configuration of the first orthogonal matrix $U_1$ comprises the full-space orthogonal parameterization of the matrix $U_1$. In an embodiment with the first layer parameterized according to the second parameterization type, the parameterization configuration of the first orthogonal matrix $U_1$ comprises a plurality of full-space orthogonal parameterizations of matricized TT-cores of the Tensor Train Decomposition (TTD) of the matrix $U_1$, which in turn define a subspace orthogonal parameterization of the matrix $U_1$. As such, the TTD parameterization of a (larger) orthogonal matrix encapsulates a plurality of orthogonal parameterizations of (smaller) orthogonal matrices, resulting from TTD of the (larger) orthogonal matrix, which gives an extra degree of compression in terms of the number of learned parameters. The parameterization configuration of the second orthogonal matrix $V_1$ may be similar to that of the first orthogonal matrix $U_1$, and thus its description is omitted where it can be assumed from the context.

In embodiments with both the first and the second types of parameterizations, the layer-wise parameterization configuration module 404 outputs parameterization configurations of the plurality of diagonal matrices of singular values $S_1, ..., S_L$, and a number of parameterization configurations of orthogonal matrices, representing the plurality of orthogonal matrices $U_1, V_1, ..., U_L, V_L$. In an embodiment, the number of parameterization configurations of orthogonal matrices equals exactly $2L$ in case that each layer is parameterized using the first parameterization type and is larger than $2L$ if at least one layer is parameterized using the second parameterization type.

In an embodiment, parameterization configurations derived by module 404 are passed into the parameterization configurations batching module 406.

As known to a person of skill in the art, algorithms of orthogonal transformations, used to produce orthogonal matrices from their respective orthogonal parameterizations, are inherently sequential. For example, the Householder transformation of a matrix of rank $r$ requires computing exactly $r$ sequential operations, each implementing one Householder reflector operation.

Assuming an example neural network having a total of $L$ layers, all of linear type and all having the same number of input and output channels, the parameterization of such a neural network with every layer parameterized according to the first parameterization type (which requires only two orthogonal matrices per layer) and with the same selected rank *r* and a Householder parameterization of orthogonal matrices, results in a total of *2rL* sequential reflector operations to compute all parameterized matrices $W_1,..., W_L$. Such growth of the number of sequential operations (linear in the number of parameterized orthogonal matrices, and linear in the selected rank) is the reason why orthogonal parameterization of neural network layers is avoided by prior works.

This limitation is overcome according to an embodiment of present disclosure by utilizing a batched (joint) transformation of orthogonal matrices of the same shape. To give a concrete example, in an embodiment with Householder parameterization of orthogonal matrices, multiple orthogonal matrices of shape $m \times r$ can undergo the orthogonal transformation simultaneously in a sequence of only *r* batched Householder reflectors. An algorithm and a computer program, implementing such batched computation within the example training process 700a (further described below), requires only r sequential steps, which benefits the speed of the training process and allows for efficient scalability of the neural network in terms of the number of layers and their size. Householder parameterization of orthogonal matrices and a padded variation thereof, enabling batched transformation, are further detailed in FIGs. 5 and 6.

The exemplary neural network discussed above is introduced for the purpose of discussion of the properties of orthogonal parameterization and transformation of a plurality of orthogonal matrices. Real neural networks weight matrices $W_1,..., W_L$ are typically of varying shapes.

Returning to process 400A, module 406 is configured to batch (group) the plurality parameterization configurations (derived by module 404) (when possible). In an embodiment, module 406 performs the batching while taking into account the specific parameterization configurations derived by module 404 (i.e., parameterization types). In another embodiment, module 406 may further account for the compute architecture used to execute the training process of the neural network.

In an embodiment with the compute architecture used to execute the training process having no or restricted vectorized computation capabilities, the module 406 may keep the input parameterization configurations unbatched, meaning that the training process will include sequential processing of the plurality of orthogonal matrices and diagonal matrices of singular values.

In an embodiment with the compute architecture used to execute the training process being capable of vectorized computations, the module 406 may batch parameterization configurations of orthogonal matrices of the same shape into respective batches, containing matrices of unique shapes. It may also batch parameterization configurations of diagonal matrices of singular values into a single batch, as the algorithm of their parameterization contains a single step, as explained previously. During training, the training process may include computing orthogonal matrices of the same shapes in parallel. Processing of batches of orthogonal matrices of different shapes may happen either in parallel or sequentially. In an embodiment with Householder parameterization of orthogonal matrices, a Householder transformation may be applied to process a batch of orthogonal matrices of the same shape (discussed in relation to FIG. 5).

In an embodiment with the compute architecture used to execute the training process being capable of vectorized computations, the module 406 may batch parameterization configurations of orthogonal matrices of the same and different shapes into any number batches, possibly a single batch. During training, the training process may include computing orthogonal matrices within the batches in parallel. In an embodiment with Householder parameterization of orthogonal matrices, a Padded Householder transformation may be applied to process a batch of orthogonal matrices of the same or different shapes (discussed in relation to FIG. 6).

At the end of processing, the parameterization configurations batching module 406 stores parameterization configurations of the plurality of neural network weight matrices $W_1,..., W_L$ in memory. In an embodiment, this may include storing parameterization configurations of batches of orthogonal matrices and/or diagonal matrices of singular values. These stored parameterization configurations may be subsequently used during the training process (e.g., by step 704 of process 700A described below, and further detailed in relation to FIG. 8A).

FIG. 4B illustrates a parameterization configuration process 400B according to an embodiment of the present disclosure. Process 400B may be used to parameterize an orthogonal matrix *U* of shape $d \times r$ according to the first parameterization type. In an embodiment, process 400B may be performed by module 404.

As shown, process 400B includes a single step 408, which includes receiving the shape 420 of the orthogonal matrix *U* and deriving an orthogonal parameterization 422 of the orthogonal matrix *U* which may be stored in memory. As discussed previously, this includes deriving the number of learned parameters and the instructions (algorithm, computer program) for computing matrix *U* from its learned parameters. In an embodiment, this includes the full-space orthogonal parameterization of the matrix *U.*

It is known that the number of independent degrees of freedom that parameterize the full space of all possible orthogonal matrices (also known as the Stiefel manifold in the prior art) of shape $d \times r,$ equals to $dr - r(r + 1)/2$. This equation gives the number of learned parameters required for a full-space parameterization configuration of the orthogonal matrix *U.* It is noted that this value is smaller than the number of elements of the orthogonal matrix (which is *dr*), thus it reduces the memory footprint of storing the learned parameters. The instructions part (algorithm, computer program) of the parameterization configuration of matrix *U* depends on the type of full-space orthogonal parameterization, selected for an embodiment. An embodiment with Householder parameterization of orthogonal matrices is discussed in relation to FIG. 5.

As mentioned previously, the second orthogonal matrix $V_1$ of shape $n \times r$ of the first layer can be parameterized similarly to the first orthogonal matrix $U_1$ of shape $m \times r$ of the first layer. As such, in an embodiment with the first layer parameterized according to the first parameterization type, the total number of learned parameters required to perform layer parameterization $W_1 = U_1 S_1 V_1^\top$ is equal to $r(m + n - r - 1)$ for an embodiment with fixed spectrum $S_1$, and $r(m + n - r)$ for an embodiment with the learned spectrum $S_1$.

FIG. 4C illustrates an example parameterization configuration process 400C according to an embodiment. Example process 400C is provided for the purpose of illustration and not limitation of embodiments of the present disclosure. Process 400C may be used to parameterize an orthogonal matrix $U$ of shape $d \times r$ using a Tensor Train Decomposition (TTD) parameterization (used in layers with the second type of parameterization). Process 400C may be performed by module 404.

In an embodiment, process 400C may be used to perform a sub-space orthogonal parameterization of a (larger) orthogonal matrix $U$ through a number of parameterizations of smaller orthogonal matrices, each of which in turn undergoes a full-space orthogonal parameterization.

Example process 400C begins in step 410, which includes receiving the shape 420 of the orthogonal matrix $U$ and deriving a shape $d_1 \times d_2 \times \cdots \times d_k \times r$ of a tensor $U'$, which may represent the first orthogonal matrix $U$ of shape $d \times r$ through matricization. Specifically, given the shape of the matrix $U$, step 410 may include factorizing the value of $d$: $d = d_1 d_2 \cdots d_k$, where $d_1, d_2, ..., d_k$ are the integer factors of $d$. In an embodiment, prime factors of $d$ (greater than 1) with repetitions may be used.

Next, step 412 includes deriving a list of ranks of a Tensor Train Decomposition (TT-ranks) of the tensor $U'$.

Mathematically, the Tensor Train Decomposition (Oseledets, 2011, "Tensor-Train Decomposition") of a $N$-dimensional array represents it using $N$ smaller three-dimensional tensors, called TT-cores. In our case, we apply a variant of TTD called the Block Tensor Train Decomposition (Dolgov et.al., 2013, 'Computation of Extreme Eigenvalues in Higher Dimensions Using Block Tensor Train Format'), to $r$ $k$-dimensional arrays (tensor $U'$ sliced along the last dimension), representing columns of $U$, and attach a block-index to the last TT-core. It can be written in the element-wise notation as follows (referred to hereinafter as 'TENSOR TRAIN'):

$$U'(i_1, i_2, ..., i_k, \rho) = \sum_{\beta_1=1}^{r_1} \sum_{\beta_2=1}^{r_2} ... \sum_{\beta_k=1}^{r_k} U'_1(\beta_1, i_1, \beta_2) \, U'_2(\beta_2, i_2, \beta_3) \, ... \, U'_k(\beta_k, i_k, \rho)$$

where tensors $U'_1, U'_2, ..., U'_k$ with respective shapes $r_1 \times d_1 \times r_2, r_2 \times d_2 \times r_3, ..., r_k \times d_k \times r$ are TT-cores, and $r_1, r_2, ..., r_k$ are the TT-ranks.

In embodiments, the TT-ranks resulting from such Tensor Train Decomposition are defined as follows:

$r_1 = 1, \; r_i = \min\left(\prod_{j=1}^{i-1} d_j, r \prod_{j=i}^{k} d_j\right), i = 2, ..., k$; such values are consistent with the mathematical properties of TTD.

Given the TT-ranks determined in step 412, step 414 includes deriving a list of shapes of TT-cores $U'_1, U'_2, ..., U'_k$, representing tensor $U'$. The shapes of the TT-cores may be $r_1 \times d_1 \times r_2, r_2 \times d_2 \times r_3, ..., r_k \times d_k \times r$.

Next, step 416 includes computing a list of shapes of matricized TT-cores. In an embodiment, the matricization of a TT-core flattens the first two dimensions of the TT-core into a single one. In the above example, this corresponds to computing a list of shapes: $r_1 d_1 \times r_2, r_2 d_2 \times r_3, ..., r_k d_k \times r$.

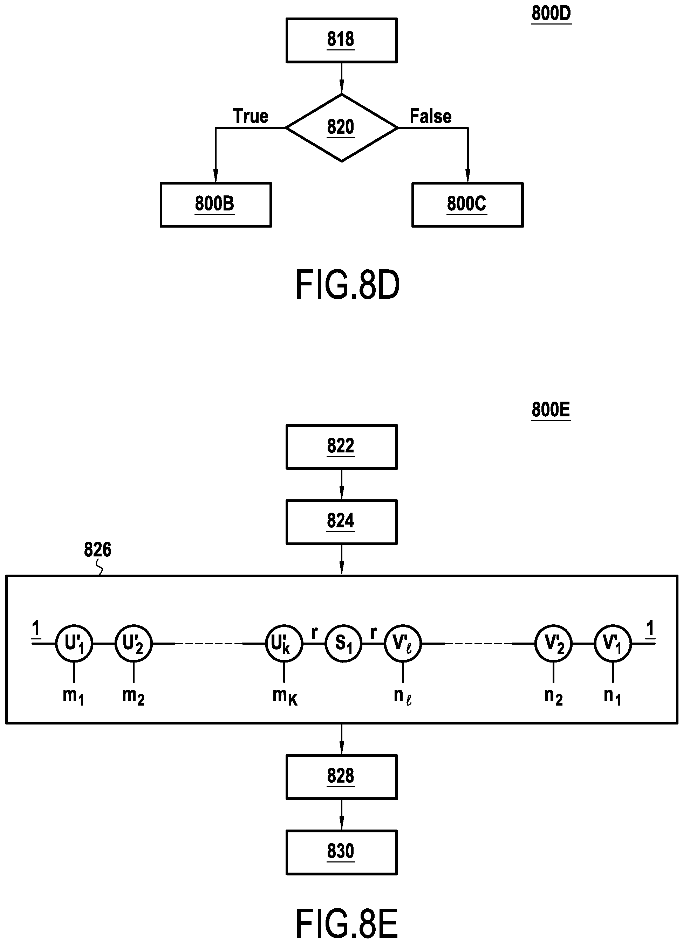

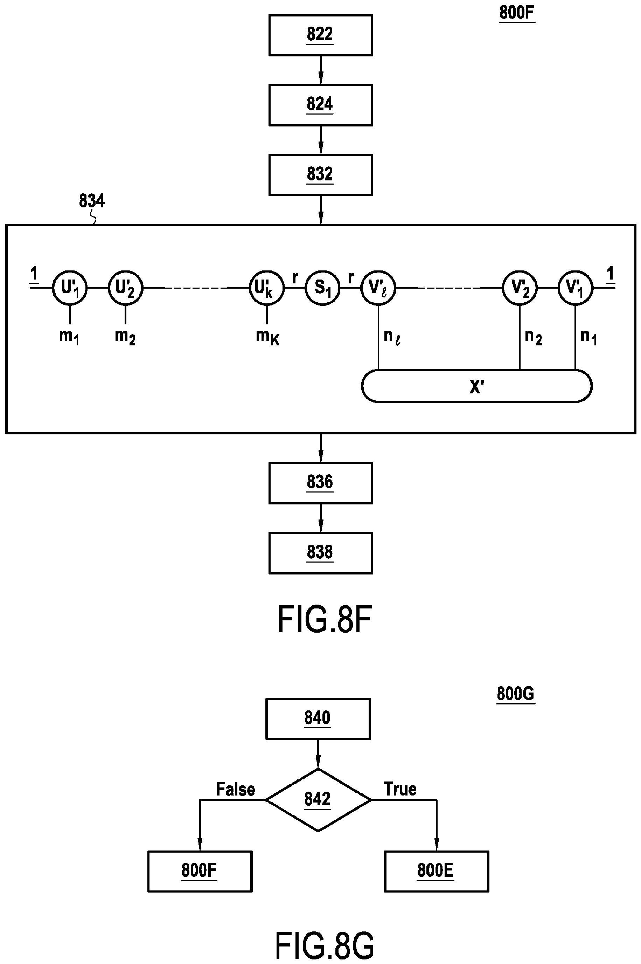

Finally, process 400C terminates at step 418, which includes performing a full-space orthogonal parameterization of each shape from the list of shapes of the matricized TT-cores. The obtained orthogonal parameterizations 424 correspond to the parameterization configuration of the matrix $U$ which may be stored in memory. The instructions of parameterization configuration of the matrix U includes the steps necessary to compute the matrix $U$ from the matricized TT-cores, which are explained in relation to FIGs. 8E, 8F, and 8G.

The orthogonal transformation, corresponding to the obtained subspace orthogonal parameterization of the matrix $U$, is the reverse sequence of steps 410-418. Given matricized TT-cores obtained through a full-space orthogonal transformation during the training process, the three-dimensional structure of all TT-cores may be recovered, tensor $U'$ may be computed as per the formula 'TENSOR TRAIN', followed by matricization of the tensor $U'$ into the matrix $U$. It is noted that elementwise computations as per the formula 'TENSOR TRAIN' are impractical; an efficient technique is provided in relation to processes 800E, 800F, and 800G.

The ability to perform batched orthogonal transformation of matricized TT-cores renders the parameterization approach of the second type of layer parameterization especially advantageous, as a high number of joint transformation possibilities typically emerge. This is particularly true when $d$ is large and can be factorized into a small quantity of unique prime factors greater than 1 (e.g., when $d$ is a power of a prime factor, such as 2). As an example, consider an orthogonal matrix $U$ of shape $16 \times 3$. The reshaped matrix $U'$ will have a shape $2 \times 2 \times 2 \times 2 \times 3$, the corresponding TT-cores $\{U_1', U_2', U_3', U_4'\}$ will have shapes $1 \times 2 \times 2$, $2 \times 2 \times 3$, $3 \times 2 \times 3$, $3 \times 2 \times 3$, and the corresponding matricized TT-cores $\{U_1'', U_2'', U_3'', U_4''\}$ will have shapes $2 \times 2$, $4 \times 3$, $6 \times 3$, $6 \times 3$. As can be seen, the last two matricized TT-cores have the same shape, and hence a batched orthogonal transformation of matrices of the same shapes can be applied to them efficiently.

In an embodiment with (full-space) Householder parameterization of orthogonal matrices, an orthogonal matrix $U$ of shape $d \times r$ can be represented using the Householder transformation of a truncated identity matrix of the same shape, as in the following equation (referred to hereinafter as 'HOUSEHOLDER EQUATION'), where $R_d^{(1)}, ..., R_d^{(r)}$ is an ordered product of $r$ Householder reflectors, and $I_{d \times r}$ is a truncated identity matrix of shape $d \times r$:

$$U = R_d^{(1)} R_d^{(2)} ... R_d^{(r)} I_{d \times r}$$

Each Householder reflector $R_d^{(i)}, i = 1, ..., r$ is a square matrix of shape $d \times d$, and is parameterized by exactly $d - i$ learned parameters, as given by the equation below (referred to hereinafter as 'REFLECTOR EQUATION'):

$$R_d^{(i)} = I - \tau^{(i)} h^{(i)} h^{(i)\top}$$

$$\tau^{(i)} = \frac{2}{\|h^{(i)}\|^2}$$

where each $h^{(i)}$ is a vector of shape $d \times 1$. As per the LAPACK software library convention, the layout of reflector parameters is given in the formula below (referred to hereinafter as 'REFLECTOR LAYOUT), where $h_{i,j}$ are the parameters of the Householder transformation, learned via the training process 700a in an embodiment of present disclosure:

$$h^{(i)\top} = \left[0, ..., 0, 1, h_{i+1,i}, ..., h_{d,i}\right]$$

FIG. 5 illustrates a canonical (full) Householder transformation of a truncated identity matrix of shape $d \times r$ to obtain an orthogonal matrix $Q$ of shape $d \times r$, using the parameters of Householder reflectors arranged in a matrix $H$ of shape $d \times r$. In the example of FIG. 5, the orthogonal matrix $Q$ is the right side matrix and the matrix $H$ is the left side matrix.

For the purpose of simplification, the truncated identity matrix is not shown in FIG. 5. According to embodiments, the truncated identity matrix may be used inside the implementation (algorithm, computer program) of the Householder transformation. While the constants (zeros above the diagonal, ones on the diagonal) are required by the canonical layout of matrix $H$, they are not stored in memory and may be a part of the instructions (algorithm, computer program) of the Householder parameterization. The arrangement of the reflector values to and from a flat vector with $dr - r(r + 1)/2$ values may also be a part of the parameterization configuration instructions. The LAPACK software library includes a function with the signature '?ORGQR', which takes a matrix $H$ of shape $d \times r$ of Householder reflector parameters, and which outputs an orthogonal matrix $Q$ of shape $d \times r$. Such a function may be used during the training process further described below (e.g., in step 704 of process 700A detailed in relation to FIG. 7A below). The LAPACK software library also includes the Householder decomposition (also known as 'QR factorization' in the prior art) as a function with the signature '?GEQRF', which takes an orthogonal matrix $Q$ of shape $d \times r$, and which outputs a matrix $H$ of shape $d \times r$ of Householder reflector parameters. This function can be used to find the initial values of learned parameters of Householder parameterization when initializing learned parameters from an uncompressed network template, as explained in relation to step 310 of the process 300.

As such, the whole orthogonal matrix $U$ of shape $d \times r$ can be Householder-parameterized by a total of $dr - r(r + 1)/2$ parameters, which matches the dimensionality of the Stiefel manifold.

It is recalled that a vectorized operation (algorithm, computer program) is an operation that has an efficient implementation using a vectorized compute architecture (such as SIMD - Single Instruction, Multiple Data), which may be best represented by GPU ("Graphics Processing Units") devices. An elementary vectorized operation is such an operation, which may have an efficient implementation through the ISA (instruction set architecture) of ALUs (arithmetic-logic units) of the considered vectorized compute architecture. Most elementary operations on vectors, matrices, and tensors, such as matrix addition or multiplication, may have efficient vectorized implementations.

As a vectorized operation, a compound vectorized operation may or may not have an efficient implementation through the ISA of the considered vectorized compute architecture, but may be decomposed into a few elementary vectorized operations, the number of which is constant.

An example of a compound vectorized operation is the function expression corresponding to the 'REFLECTOR EQUATION' - it decomposes computation of each reflector into the following elementary vectorized operations: computing the norm of a vector, multiplying a vector by a constant, computing an outer product of a vector, and subtracting two matrices.

It is also noted that the Householder transformation (see 'HOUSEHOLDER EQUATION) is considered neither an elementary nor a compound vectorized operation, as it decomposes into r sequential reflection operations, where r is not a constant.

It is also noted, that the notion of a compound vectorized operations depends on the ISA, and some compound operations may be elementary in architectures with a different ISA, and vice-versa. Henceforth, for the sake of generality, a distinction will not be made herein between elementary and compound vectorized operations and they will be referred to collectively as 'vectorized operations'.

The time required to perform computation of a vectorized operation may depend on the size of the operands and/or the number of ALUs (arithmetic-logic units). Through the rest of the description, a vectorized compute architecture is assumed. Additionally, the vectorized compute architecture is assumed to have sufficient resources (such as the number of ALUs), required to perform computations of vectorized operations with the maximal level of parallelism (e.g., without queueing of operands' parts which would otherwise be processed in parallel given more computational resources). We introduce a 'time step' as a term to denote the maximum time required to perform a vectorized operation on the operands of a maximal size, accommodated by the compute architecture.

In an embodiment, as further discussed above, a vectorized compute architecture may be used for executing the training process.

In an embodiment with no batching of matrices of the same shape in step 406, an orthogonal transformation of $B$ orthogonal matrices of shape $d \times r$ is performed in sequence for all matrices. Assuming the number of sequential steps of the orthogonal transformation algorithm required to compute one such matrix equal to $T$, the total number of sequential steps to perform the orthogonal transformation of all matrices equals $BT$.

In an embodiment with batching matrices of the same shape in step 406, an orthogonal transformation of a batch of $B$ orthogonal matrices of shape $d \times r$ may be performed in parallel for all matrices (if the transformation implementation (algorithm, computer program) does not alter its behavior based on the operands' values). This is due to the fact that each of the $T$ sequential steps of the algorithm can be applied $B$ times in parallel, which in turn does not count towards the number of sequential steps required to compute the entire batch of matrices. The condition that the algorithm behavior be independent of the operands' values is required to maintain the coalesced parallelism of each vectorized operation and to treat B operands as a single operand of a larger size.

As would be appreciated based on the teachings above, the Householder transformation is a compound operation, represented by a sequence of $r$ Householder reflector operations, each of which can be treated as a vectorized operation (see 'HOUSEHOLDER EQUATION'). As such, the Householder parameterization according to the present disclosure allows to increase the use of vectorization in a vectorized compute architecture. This enhances the functioning of the computer hosting the algorithm.

For example, in an embodiment using a vectorized compute architecture, a Householder transformation to compute an orthogonal matrix of rank $r$ requires $r$ time steps. For a batch of $B$ orthogonal matrices of shape $d \times r$, the Householder parameterization allows for the possibility to have each of the $r$ reflector operations applied to each of the $B$ inputs in parallel. This maintains the number of time steps required to compute the entire batch of matrices at exactly $r$. In other words, a speed up in the transformation that is linear in the size of the batch $B$ can be achieved compared to a parametrization that does not enable similar batching. Hereinafter, this transformation is referred to as a 'Batched Householder' transformation. It is noted that the amounts of scalar operations (such as FLOPs, floating-point operations) required to perform the Batched Householder transformation, and a sequence of individual Householder transformations of each matrix in the batch, are exactly the same; the performance benefits arise from the optimized order of the operations due to batching, which allows more of them to happen in the same time step.

In an embodiment using Householder parameterization of orthogonal matrices, an orthogonal matrix $Q$ of shape

$d \times r$ can have a Householder parameterization as a larger orthogonal matrix $P$ of shape $D \times R$, $D > d$, $R > r$, $D \geq R$, by means of assigning a constant value of zero to the parameters of the last $R - r$ Householder reflectors of parameterization of $P$, and assigning a constant value of zero to the last $D - d$ parameters of each of the $R$ Householder reflectors of parameterization of $P$. Upon applying the Householder transformation to such parameterization, the parameterized matrix $Q$ is formed in the first $d$ rows and first $r$ columns of the parameterized matrix $P$; other values of the matrix $P$ may be discarded. Hereinafter, this type of orthogonal parameterization is referred to as a 'Padded Householder' parameterization. An example of such parameterization is illustrated in FIG. 6. In the example of FIG. 6, the orthogonal matrix $Q$ is enclosed within the larger orthogonal matrix $P$, both seen on the right side.

In an embodiment using Householder parameterization of orthogonal matrices and batching of orthogonal matrices of the same or different shapes, a first and a second orthogonal matrices of different shapes $d_1 \times r_1$ and $d_2 \times r_2$, possibly belonging to different layers of the network, can have a joint Householder parameterization within the same batch of orthogonal matrices of shape $\max(d_1, d_2) \times \max(r_1, r_2)$. Such batching is made possible by applying the Padded Householder parameterization to each of the first and second orthogonal matrices after determining the minimum shape of an orthogonal matrix capable of enclosing each of the first and second orthogonal matrices. After applying the Padded Householder parameterization of both first and second matrices with the shape $\max(d_1, d_2) \times \max(r_1, r_2)$, the Batched Householder transformation can be used to compute the padded orthogonal matrices, enclosing the first and second orthogonal matrices. The first and the second orthogonal matrices can be obtained from the padded ones by taking the top-left sub-matrices of the shapes $d_1 \times r_1$ and $d_2 \times r_2$ respectively, out of the padded ones.

While doing so requires more scalar operations (such as FLOPs, floating-point operations) to compute the parameterized matrices, as compared with an unpadded parameterization, such a joint parameterization scheme provides a way to reduce the number of time steps to produce both matrices, under the assumption of the vectorized compute architecture made above. To compute the two parameterizations independently of each other, it would take such a machine $r_1 + r_2$ time steps. The joint parameterization will take only $\max(r_1, r_2)$ time steps. Considering a plurality of parameterizations of different shapes $d_1 \times r_1$, ..., $d_N \times r_N$, the efficiency of the proposed method reveals an asymptotically linear speed up in the number of uniquely parameterized shapes from $r_1 + \cdots + r_N$ steps down to $\max(r_1, ..., r_N)$ time steps.

As such, a collection of orthogonal matrices of different shapes can be parameterized using a single batched Householder parameterization of matrices. The collection of orthogonal matrices may include matrices that belong to parameterizations of different layers (possibly the whole set of layers representing the neural network), regardless of the parameterization type (first or second parameterization type) used for said parameterizations. This significantly enhances the functioning of the computer in the case of a vectorized compute architecture, such as GPU, ASIC (Application-Specific Integrated Circuit), or FPGA (Field Programmable Gate Arrays), for example.

In another embodiment using Householder parameterization of orthogonal matrices, the learned parameters of the Householder reflectors $h_{i,j}$ (see e.g., FIGs. 5 and 6), used in parameterizations of orthogonal matrices, can be further decomposed (thus changing status from learned parameters into parameterized values) into a product of $K$ coefficients ($c$) and $K$ vectors ($a$). The vectors ($a$) are collectively referred to as the 'reflectors anchors'. The formula below, which expands on the REFLECTOR EQUATION above, illustrates this decomposition of the Householder reflectors $h_{i,j}$:

$$h_{i,j} = \sum_{k=1}^{K} c^{(k)} a_{i,j}^{(k)} \text{, or more generally } h_{i,j} = \sum_{k=1}^{K} c_{i,j}^{(k)} a_{i,j}^{(k)}$$

Given such a decomposition, in an embodiment, the reflectors anchors ($a$) may be constants, and may be stored in a read-only memory or generated in-memory using a deterministic algorithm, such as a pseudorandom numbers generator with a fixed seed. Accordingly, the coefficients ($c$) alone represent the new learned parameters. Such further decomposition can be advantageous, for example, if the number $K$ is small, and the amount of learned parameters ($c$) is smaller than the Householder parameterization would require it with $h_{i,j}$ being the learned parameters.

Another example where such decomposition can be advantageous, is when the training process enforces a sparsity constraint on the vector of coefficients $[c^{(1)}, ..., c^{(K)}]$ (or $\left[ c_{i,j}^{(1)}, ..., c_{i,j}^{(K)} \right]$ in a more general case), which constraint means that all values of the vector of length $K$, except for a small number (typically one), are zeros. In such a case, instead of storing $K$ coefficients per each reflector value in the memory (during either training or inference or both), it becomes possible to store just the indices and values of the non-zero elements, thus realizing another level of compression of the neural network representation. The usage of such decomposition is also beneficial for the stability of training, as any possible values of coefficients and anchors lead to a valid representation of Householder reflectors. Thus, the Householder-parameterized matrices remain orthogonal, which, together with spectrum constraints, enhances stability of training.

Given the same decomposition, in another embodiment, both the coefficients (*c*) and reflectors anchors (*a*) of the first orthogonal matrix parameterized with Householder parameterization may constitute the learned parameters.

Given the same decomposition, in another embodiment, either the coefficients (*c*), or the reflectors anchors (*a*), of the first orthogonal matrix parameterized with Householder parameterization, may be shared with the Householder parameterization of another orthogonal matrix.

FIG. 7A illustrates an example process 700A for training a neural network according to an embodiment of the present disclosure. Example process 700A is provided for the purpose of illustration and not limitation of embodiments of the present disclosure. It is assumed in process 700A that the neural network is parameterized by learned parameters $\{\theta_1, ..., \theta_N\}$ according to a parameterization configuration, as discussed above.

As shown in FIG. 7A, example process 700A begins in step 702, which includes obtaining a data sample (*x,y*) from a dataset. The data sample may include an input *x* and an expected (ground truth) output of the neural network *y*, which corresponds to the supervised learning setting of a neural network training.

Subsequently, step 704 includes computing a predicted output $\hat{y}$ by applying the neural network, parameterized by the learned parameters $\{\theta_1, ..., \theta_N\}$, to the data sample. In an embodiment, step 704 may include computing a mapping of each neural network layer based on the applied data sample. The mapping of a layer provides the layer's output in response to the input to the layer. Each operation within the mapping algorithm may be recorded along with its operands for use during subsequent gradients computation (e.g., in step 708). As further described below with reference to FIGs. 8B-8G, different approaches may be used according to embodiments to compute the mapping of a layer.

Next, step 706 includes computing a loss $\mathcal{L}$ as a discrepancy function of the ground truth output *y* and the predicted output $\hat{y}$. Each operation within the loss computation algorithm may be recorded along with its operands for use during a subsequent backpropagation procedure (e.g., in step 708).

Subsequently, based on the loss $\mathcal{L}$, step 708 includes computing loss gradients. Because the neural network is parameterized according to a particular parameterization configuration, the loss gradients are computed with respect to the learned parameters $\{\theta_1, ..., \theta_N\}$, as defined by the parameterization configuration. This step may use a procedure called 'backpropagation' which is known to a person of skill in the art. In an embodiment, the backpropagation procedure may use the mapping instructions and their associated operands recorded in step 704. Alternatively, the gradients computation step may be performed explicitly using any of the alternative approaches, including explicit analytic derivation and computation.

Next, step 710 includes updating the learned parameters $\{\theta_1, ..., \theta_N\}$ using the computed loss gradients. Given a first learned parameter $\theta_1$, and its computed gradient $\partial\mathcal{L}/\partial\theta_1$, the update equation may be given by $\theta_1 := \theta_1 - \alpha \cdot \partial\mathcal{L}/\partial\theta_1$, where $\alpha$ is a 'learning rate' hyperparameter selected for the process 700A.

Process 700A may iterate an unspecified number of times according to steps 702-710, until a stop condition (e.g., acceptable performance is reached on a validation dataset) is satisfied in step 712.

FIG. 7B illustrates an example process 700B for inference with a neural network according to an embodiment of the present disclosure. Example process 700B is provided for the purpose of illustration and not limitation of embodiments of the present disclosure. It is assumed in process 700B that the neural network is parameterized by learned parameters $\{\theta_1, ..., \theta_N\}$ according to a parameterization configuration, as discussed above.

As shown in FIG. 7B, process 700B includes steps 702 and 704, which have been described above with reference to training process 700A. It is noted, however, that in the case of inference the data sample obtained in step 702 may include the input *x* only.

FIG. 8A illustrates an example process 800A for computing components of weight matrices $W_1 ..., W_L$ parameterized according to embodiments of the present disclosure. The components provided by process 800A may include a plurality of diagonal matrices of singular values and/or a plurality of orthogonal matrices. Example process 800A may be used in step 704 of processes 700A and 700B described above to compute the predicted output of the neural network in response to a data sample. Example process 800A is provided for the purpose of illustration and not limitation of embodiments of the present disclosure.

Process 800A begins in step 802, which includes reading the parameterization configuration of a neural network. The parameterization configuration of the neural network may comprise parameterization configurations of a plurality of orthogonal matrices and parameterization configurations of a plurality of diagonal matrices of singular values $S_1,...,S_L$. The parameterization configuration may further include a batching configuration produced and stored in memory during the parameterization configuration derivation (e.g., during step 306, detailed in relation to processes 400A, 400B, and 400C). It is reminded that the parameterization configuration of a neural network links the learned parameters $\{\theta_1, ..., \theta_N\}$ instantiated in memory with instructions (algorithm, computer program) on obtaining higher-level structures such as vectors, matrices, and tensors, from arrangements of these learned parameters, to compute weight matrices $W_1, \ldots, W_L$.

Next, in step 804, process 800A includes processing the parameterization configurations of the plurality of diagonal matrices of singular values. In an embodiment, step 804 may include executing the function expression associated with each of the parameterization configurations. As described above, the function expression may be used to compute parameterized entities from the learned parameters of a parameterization configuration. The function expression may be represented using instructions, an algorithm, or a computer program, for example.

In an embodiment, the parameterization configurations of some of the diagonal matrices of singular values may be provided as one or more batches. The one or more batches may be generated for example by a batching module, such as batching module 406. When the training is performed using a vectorized compute architecture, the diagonal matrices associated with a given batch may be computed in parallel. When a large number of diagonal matrices are involved, batched computations lead to improved performance of this step with vectorized compute architectures.

In an embodiment with a fixed spectrum (of the network layers), the diagonal matrices do not depend on any learned parameters, and thus their representation can be computed once and stored in memory for subsequent reads.

The output of step 804 is a plurality of diagonal matrices of singular values, computed from a subset of the learned parameters $\{\theta_1, \ldots, \theta_N\}$ corresponding to parameterization configurations of diagonal matrices of singular values.

Concurrently with, before, or after step 804, in step 806, process 800A includes processing the parameterization configurations of the plurality of orthogonal matrices. In an embodiment, step 806 may include executing the function expression associated with each of the parameterization configurations. As described above, the function expression may be used to compute parameterized entities from the learned parameters of a parameterization configuration. The function expression may be represented using instructions, an algorithm, or a computer program, for example.

In an embodiment, the parameterization configurations of some of the orthogonal matrices may be provided as one or more batches. The one or more batches may be generated by a batching module, such as batching module 406. When the training is performed using a vectorized compute architecture, the orthogonal matrices associated with a given batch may be computed in parallel. When a large number of orthogonal matrices are involved, batched computations lead to improved performance of this step with vectorized compute architectures.

The output of step 806 is a plurality of orthogonal matrices, computed from a subset of the learned parameters $\{\theta_1, \ldots, \theta_N\}$ corresponding to parameterization configurations of orthogonal matrices.

Process 800A terminates in step 808, which includes storing in memory the plurality of diagonal matrices determined in step 804 and the plurality of orthogonal matrices determined in step 806.

FIGs. 8B-8D illustrate example processes 800B-800D for computing the mapping of a layer of a neural network according to an embodiment of the present disclosure. Example processes 800B-800D may be used in step 704 of processes 700A and 700B described above, to compute the output of the first layer ($y_i$) in response to an input ($x_1$) based on the applied data sample. Specifically, these example processes may be used in an embodiment in which the first layer is parameterized according to the first parameterization type, and with a full-space orthogonal parameterization of orthogonal matrices $U_1$ and $V_1$ resulting from SVD parameterization of layer's weight matrix $W_1$.

For the purpose of illustration only, example processes 800A-800G are described with reference to the first layer of the neural network, the first layer having a weight matrix $W_1$.

FIG. 8B illustrates an example process 800B in which the computation of the mapping of the first layer includes a full decompression of the parameterization of the first layer to compute the weight matrix $W_1$ associated with the first layer. In an embodiment, process 800B may be used to compute the first layer's mapping when such a computation scheme is known to be the most efficient (e.g., as compared to the process 800C) for the first layer or when explicit access to the weight matrix (e.g., $W_1$) is required. The cost of processes 800B and 800C may be pre-computed during the parameterization configuration phase of the first layer.

As shown in FIG. 8B, process 800B begins in step 810, which includes reading from memory the first diagonal matrix of singular values $S_1$, the first orthogonal matrix $U_1$, and the second orthogonal matrix $V_1$. The first diagonal matrix of singular values $S_1$ the first orthogonal matrix $U_1$, and the second orthogonal matrix $V_1$ may be computed as a result of executing process 800A. Next, step 812 includes decompressing the first layer's weight matrix $W_1$ of shape $m \times n$

according to the SVD parameterization: $W_1 = U_1 S_1 V_1^\top.$ The choice of order of multiplication (either $U_1(S_1 V_1^\top)$ or $(U_1 S_1)V_1^\top$, indicated by parentheses) affects the number of scalar operations required to compute $W_1$; in an embodiment, the order can be defined during the parameterization configuration phase based on analysis of the dimensions of the components: if $m < n$, then the optimal order is $(U_1 S_1)V_1^\top$; otherwise, it is $U_1(S_1 V_1^\top).$

Process 800B terminates in step 814, which includes computing the first layer's mapping as $y_1 = W_1 x_1 + b_1$, where $x_1$ denotes the layer input based on the applied data sample and $b_1$ denotes a bias vector associated with the layer. The bias vector may be a vector of learned parameters.

FIG. 8C illustrates another example process 800C in which the computation of the mapping of the first layer includes a direct mapping of the parameterization of the layer to avoid computation of the first weight matrix $W_1$ associated with the layer. Process 800C may be used to compute the first layer's mapping when such a computation scheme is known to be the most efficient (e.g., as compared to the process 800B) for the first layer and when explicit access to the weight matrix (e.g., $W_1$) is not required. The cost of processes 800B and 800C may be pre-computed during the parameterization configuration phase of the first layer.

Process 800C begins in step 810, which is described above with respect to process 800B.

Subsequently, the process proceeds to step 816, which includes computing the mapping of the first layer directly based on the first diagonal matrix of singular values $S_1$, the first orthogonal matrix $U_1$, and the second orthogonal matrix $V_1$, instead of further computing the weight matrix $W_1$. Specifically, the mapping of the first layer may be computed as

$$y_1 = U_1\big(S_1(V_1^\top x_1)\big) + b_1$$ (following the order of operations indicated by the parentheses).

FIG. 8D illustrates another example process 800D in which the computation of the mapping of the first layer follows a hybrid approach. Process 800D begins in step 818, which includes loading the values of the computational costs of processes 800B and 800C in relation to computing the first layer's mapping. The computational costs may be obtained during the step of determining a parameterization configuration of the neural network (e.g., in step 306 of process 300).

Next, step 820 includes evaluating the logical condition of whether the full decompression process, i.e., process 800B, is computationally cheaper for the first layer than the direct mapping process, i.e., process 800c, or whether explicit access to the first weight matrix $W_1$ is required. The logical condition may depend on the compute architecture used to execute the training process and may be pre-computed during the determination of the parameterization configuration of the neural network.

If the condition is TRUE (i.e., process 800B is computationally cheaper or direct access to first weight matrix $W_1$ is required), process 800D proceeds to execute the process 800B. Otherwise (i.e., if process 800B is not computationally cheaper and direct access to the first weight matrix $W_1$ is not required), the process executes the process 800C.

FIGs. 8E-8G illustrate other example processes for computing the mapping of the first layer of a neural network according to an embodiment of the present disclosure. Example processes 800E-800G may be used in step 704 of processes 700A and 700B described above, to compute the output of the first layer ($y_1$) in response to an input ($x_1$) based on the applied data sample. Specifically, these example processes may be used in an embodiment in which the first layer is parameterized according to the second parameterization type, and with an orthogonal parameterization of matricized TT-cores of the TTD parameterization of orthogonal matrices $U_1$ and $V_1$ resulting from SVD parameterization of layer's weight matrix $W_1$.

FIG. 8E illustrates an example process 800E in which the computation of the mapping of the first layer includes a full decompression of the parameterization of the first layer to compute the weight matrix $W_1$ associated with the first layer. Process 800E may be used to compute the first layer's mapping when such a computation scheme is known to be the most efficient (e.g., as compared to the process 800F) for the first layer or when explicit access to the weight matrix (e.g., $W_1$) is required. The cost of processes 800E and 800F may be pre-computed during the parameterization configuration phase of the first layer.

As shown in FIG. 8E, example process 800e begins in step 822, which includes reading from memory the first diagonal matrix of singular values $S_1$ and the plurality of orthogonal matrices $U_1'', ..., U_k'', V_1'', ..., V_l''$. The first diagonal matrix $S_1$ and the plurality of orthogonal matrices $U_1'', ..., U_k'', V_1'', ..., V_l''$ may be computed as a result of executing process 800A. The matrices $U_1'', ..., U_k'', V_1'', ..., V_l''$ represent the matricized TT-cores of the TTD parameterization of orthogonal matrices $U_1$ and $V_1$ resulting from SVD parameterization of layer's weight matrix $W_1$.

Next, in step 824, process 800E includes reshaping the plurality of orthogonal matrices $U_1'', ..., U_k'', V_1'', ..., V_l''$ into three-dimensional TT-cores $U_1', ..., U_k', V_1', ..., V_l'$ according to the parameterization configuration of the first layer.

Subsequently, step 826 includes constructing a tensor network based on the first diagonal matrix $S_1$ and the plurality of orthogonal matrices $U_1'', ..., U_k'', V_1'', ..., V_l''$. The tensor network corresponds to the SVD parameterization of the first weight matrix $W_1$ with subsequent TTD parameterization of both orthogonal matrices $U_1$ and $V_1$.

It is reminded that a 'tensor network' is a graphical notation for the representation of tensor products, such as the TTD parameterization (see 'TENSOR TRAIN' equation), where each of the tensor components on the right part of the equation is represented with a circle node with the number of legs, corresponding to the number of dimensions of the component tensor. Connected legs between a pair of tensors represent the operation of product and summation along the connected dimension, which corresponds to the sum operator in the equation's right part. One notable operation on tensor networks is a 'contraction', which eliminates all connected legs through product and summation, and results in a single larger tensor with free legs corresponding to free legs of the original tensor network. The notion of tensor networks and operations with them are known to a person of skill in the art. For the purpose of illustration, step 826 contains an illustration of the tensor network constructed in this step.

Next, step 828 includes computing the matrix $W_1$ from the tensor network constructed in step 826. In an embodiment, step 828 includes performing the operation of contraction on the tensor network, which is effectively a pairwise elimination of the connected dimensions between the neighbor nodes of the tensor network. The order of pairwise dimensions elimination defines the number of scalar operations required to perform the contraction; an optimal order may be computed during the determination of the parameterization configuration of the neural network (e.g., step 306). The result of tensor network contraction is a tensorized matrix $W'_1$ of shape $m_1 \times m_2 \times \cdots \times m_k \times n_l \times \cdots \times n_2 \times n_1$. To obtain the matrix $W_1$ in the original shape $m \times n$, an extra matricization step is performed within step 828.

Process 800E terminates in step 830, which includes computing the mapping of the first layer as $y_1 = W_1 x_1 + b_1$, where $x_1$ denotes the layer input based on the applied data sample and $b_1$ denotes a bias vector associated with the layer. The bias vector may be a vector of learned parameters.

FIG. 8F illustrates another example process 800F in which the computation of the mapping of the first layer includes a direct mapping of the parameterization of the first layer to avoid computation of the first weight matrix $W_1$ associated with the first layer. Process 800F may be used to compute the first layer's mapping when such a computation scheme is known to be the most efficient (e.g., as compared to the process 800E) for the first layer and when explicit access to the weight matrix (e.g., $W_1$) is not required. The cost of processes 800E and 800F may be pre-computed during the parameterization configuration phase of the first layer.

Process 800F begins in step 822, and then proceeds to step 824, both of which are described above with respect to process 800E.

Next, process 800F proceeds to step 832, which includes tensorizing the layer input vector $x_1$ into a tensor $x'_1$ of shape $n_l \times \cdots \times n_2 \times n_1$ according to the parameterization configuration of the first layer. It is noted that step 832 may also be performed before or concurrently with steps 822 and 824.

Subsequently, step 834 includes constructing a tensor network based on the matrix $S_1$, the TT-cores $U'_1, ..., U'_k, V'_1, ..., V'_l$, and the tensorized layer input tensor $x'_1$. The tensor network corresponds to the SVD parameterization of the first weight matrix $W_1$ with subsequent TTD parameterization of both orthogonal matrices $U_1$ and $V_1$, with legs of tensor $x'_1$ attached to corresponding legs of TT-cores $V'_1, ..., V'_l$. For the purpose of explanation, an illustration of the constructed tensor network is illustrated within step 834 in FIG. 8F. Such a tensor network can be contracted without obtaining the first layer's weight matrix $W_1$ in its explicit form, which may be beneficial in terms of the number of scalar operations required to compute the layer mapping.

It is noted that the tensor network constructed in step 834 corresponds to the expression $W'_1 x'_1$, expressed in terms of the components of the matrix $W_1$ according to its parameterization configuration.

Process 800F then proceeds to step 836, which includes contracting the tensor network (using the contraction operation) constructed in step 834. The result of tensor network contraction is a tensorized product $y'_1 = W'_1 x'_1$ of shape $m_1 \times m_2 \times \cdots \times m_k$. To obtain the product in the original vector form with m elements, an extra vectorization step is performed, yielding vector $\tilde{y}_1$ with shape $m \times 1$.

Process 800F terminates in step 838, which includes computing the mapping of the first layer as $y_1 = \tilde{y}_1 + b_1$, where $b_1$ denotes a bias vector associated with the first layer.

FIG. 8G illustrates another example process 800G in which the computation of the mapping of the first layer follows a hybrid approach. Process 800G begins in step 840, which includes loading the values of the computational costs of processes 800E and 800F in relation to computing the mapping of the first layer. The computational costs may be obtained during the step of determining a parameterization configuration of the neural network (e.g., in step 306 of process 300).

Next, step 820 includes evaluating the logical condition of whether the full decompression process, i.e., process 800E, is computationally cheaper for the first layer than the direct mapping process, i.e., process 800F, or whether explicit access to the first weight matrix $W_1$ is required. The logical condition may depend on the compute architecture used to execute the training process and may be pre-computed during the determination of the parameterization configuration of the neural network.

If the condition is TRUE (i.e., process 800E is computationally cheaper or direct access to the first weight matrix $W_1$ is required), process 800G proceeds to execute the process 800E. Otherwise (i.e., if the process 800E is not computationally cheaper and direct access the first weight matrix $W_1$ is not required), the process executes the process 800F.

Although the present invention has been described above with reference to certain specific embodiments, it will be understood that the invention is not limited by the particularities of the specific embodiments. Numerous variations, modifications, and developments may be made in the above-described embodiments within the scope of the appended claims.

**Claims**

1. A computer-implemented method (300) for training a neural network in compressed form, comprising:

   obtaining (302) a network template of the neural network;
   selecting (304) a rank and a parameterization type for a first layer of the neural network, the first layer being associated with a first weight matrix of shape m $\times$ n, and the selected rank r being less than or equal to the smallest of m and n;
   determining (306) a parameterization of the neural network based on the network template and the selected rank and parameterization type for the first layer of the neural network, wherein the determined parameterization identifies learned parameters for parameterizing the first layer of the neural network;
   instantiating (308) and initializing (310) the learned parameters in memory; and
   training (312) the neural network, including updating the values of the learned parameters that parameterize the first layer of the neural network,
   wherein determining (306) the parameterization of the neural network comprises deriving parameterization configurations of components resulting from an SVD decomposition of the first weight matrix of the first layer of the neural network, said parameterization configurations comprising orthogonal parameterizations of first and second orthogonal matrices and a parameterization configuration of a diagonal matrix of singular values, the first and second orthogonal matrices and the diagonal matrix resulting from the SVD decomposition of the first layer.

2. The computer-implemented method (300) of claim 1, wherein the singular values of the diagonal matrix are constrained by the range [-C, C] in the parameterization configuration of the diagonal matrix, where C is a constant.

3. The computer-implemented method (300) of any of claims 1-2, wherein the orthogonal parameterizations of the first and second orthogonal matrices are full-space orthogonal parameterizations.

4. The computer-implemented method (300) of claim 3, wherein the full-space orthogonal parameterizations of the first and second orthogonal matrices are Householder parameterizations of the first and second orthogonal matrices.

5. The computer-implemented method (300) of claim 4, comprising:

   receiving (408) the shape of the first/second orthogonal matrix; and
   deriving a full-space orthogonal parameterization of the first/second orthogonal matrix.

6. The computer-implemented method (300) of any of claims 1-2, wherein the orthogonal parameterizations of the first and second orthogonal matrices are subspace orthogonal parameterizations.

7. The computer-implemented method (300) of claim 6, wherein the subspace orthogonal parameterizations of the first and second orthogonal matrices are Tensor Train Decomposition, TTD, parameterizations of the first and second orthogonal matrices.

8. The computer-implemented method (300) of claim 7, comprising:

   receiving (410) the shape of the first/second orthogonal matrix;

deriving (410) a shape of a tensor based on the shape of the first/second orthogonal matrix;

deriving (412) a list of ranks of a TTD of the tensor;

deriving (414) a list of shapes of TT-cores representing the tensor based on the ranks;

computing (416) a list of shapes of matricized TT-cores; and

performing (418) a full-space orthogonal parameterization of each shape from the list of shapes of the matricized TT-cores to obtain the TTD parameterization of the first/second orthogonal matrix.

9.  The computer-implemented method of any of claims 1-8, wherein training (312) the neural network comprises:

obtaining (702) a data sample from a dataset, the data sample including an input and an expected output of the neural network;

computing (704) a predicted output by applying the neural network, as parameterized by the determined parameterization, to the data sample;

computing (706) a loss as a discrepancy function of the expected output and the predicted output;

computing (708) loss gradients based on the computed loss, wherein said computing comprises computing loss gradients with respect to the learned parameters of the first layer of the neural network; and

updating (710) the learned parameters of the first layer using the loss gradients computed with respect to the learned parameters of the first layer.

10. The computer-implemented method (300) of claim 9, wherein computing (704) the predicted output comprises:

reading (802) the parameterization configurations of the first and second orthogonal matrices and of the diagonal matrix; and

executing (804, 806) a function expression associated with each of the parameterization configurations to obtain a plurality of orthogonal matrices and the diagonal matrix.

11. The computer-implemented method (300) of claim 10, wherein the obtained plurality of orthogonal matrices corresponds to the first and second orthogonal matrices, the method comprising:

decompressing (812) the first weight matrix of the first layer according to $W_1 = U_1 S_1 V_1^\top$, $W_1$ where $W_1$ denotes the first weight matrix, $U_1$ and $V_1$ denote the obtained first and second orthogonal matrices, and $S_1$ denotes the obtained diagonal matrix; and

computing (814) a mapping of the first layer as $y_1 = W_1 x_1 + b_1$ where $x_1$ denotes the input of the first layer based on the applied data sample and $b_1$ denotes a bias vector associated with the first layer.

12. The computer-implemented method (300) of claim 10, wherein the obtained plurality of orthogonal matrices correspond to the first and second orthogonal matrices, the method comprising:

computing (816) a mapping of the first layer as $y_1 = U_1\big(S_1(V_1^\top x_1)\big) + b_1$, where $U_1$ and $V_1$ denote the obtained first and second orthogonal matrices, and $S_1$ denotes the obtained diagonal matrix, $x_1$ denotes the input of the first layer based on the applied data sample, and $b_1$ denotes a bias vector associated with the first layer.

13. The computer implemented method (300) of claim 10, wherein the obtained plurality of orthogonal matrices correspond to matricized TT-cores of a Tensor Train Decomposition, TTD, of the first and second orthogonal matrices, the method comprising:

reshaping (824) the plurality of orthogonal matrices into three-dimensional TT-cores according to the parameterization configurations of the first layer;

constructing (826) a tensor network based on the first diagonal matrix $S_1$ and the plurality of orthogonal matrices;

contracting (828) the tensor network to obtain the first weight matrix; and

computing (830) a mapping of the first layer as $y_1 = W_1 x_1 + b_1$, where $W_1$ denotes the first weight matrix, $x_1$ denotes the input of the first layer based on the applied data sample, and $b_1$ denotes a bias vector associated with the layer.

14. The computer-implemented method (300) of claim 10, wherein the obtained plurality of orthogonal matrices correspond to matricized TT-cores of a Tensor Train Decomposition, TTD, of the first and second orthogonal matrices, the method comprising:

reshaping (824) the plurality of orthogonal matrices into three-dimensional TT-cores according to the parameterization configurations of the first layer;

tensorizing (832) input vector $x_1$ of the first into a tensor $x_1'$ of shape $n_1 \times \cdots \times n_2 \times n_1$ according to the parameterization configurations of the first layer;

constructing (834) a tensor network based on the diagonal matrix, the TT-cores, and the tensor $x_1'$;

contracting (836) the tensor network to obtain a tensorized product $y_1' = W_1' x_1'$ of shape $m_1 \times m_2 \times \cdots \times m_k$ and vectorizing the tensorized product to obtain a vector $\tilde{y}_1$ with shape $m \times 1$; and

computing (838) a mapping of the first layer as $y_1 = \tilde{y}_1 + b_1$, where $b_1$ denotes a bias vector associated with the first layer.

**15.** A computer program (PROG) including instructions that when executed by a processor (202) cause the processor (202) to execute a method according to any of claims 1-14.

**16.** A neural network obtained using the method of any of claims 1-14.

**Amended claims in accordance with Rule 137(2) EPC.**

**1.** A computer-implemented method (300) for training a neural network in compressed form, comprising:

obtaining (302) a network template of the neural network;
selecting (304) a rank and a parameterization type for a first layer of the neural network, the first layer being associated with a first weight matrix of shape $m \times n$, and the selected rank r being less than or equal to the smallest of m and n;
determining (306) a parameterization of the neural network based on the network template and the selected rank and parameterization type for the first layer of the neural network, wherein the determined parameterization identifies learned parameters for parameterizing the first layer of the neural network;
instantiating (308) and initializing (310) the learned parameters in memory; and
training (312) the neural network, including updating the values of the learned parameters that parameterize the first layer of the neural network,
wherein determining (306) the parameterization of the neural network comprises deriving parameterization configurations of components resulting from an SVD decomposition of the first weight matrix of the first layer of the neural network, said parameterization configurations comprising orthogonal parameterizations of first and second orthogonal matrices and a parameterization configuration of a diagonal matrix of singular values, the first and second orthogonal matrices and the diagonal matrix resulting from the SVD decomposition of the first layer.

**2.** The computer-implemented method (300) of claim 1, wherein the singular values of the diagonal matrix are constrained by the range [-C, C] in the parameterization configuration of the diagonal matrix, where C is a constant.

**3.** The computer-implemented method (300) of any of claims 1-2, wherein the orthogonal parameterizations of the first and second orthogonal matrices are full-space orthogonal parameterizations.

**4.** The computer-implemented method (300) of claim 3, wherein the full-space orthogonal parameterizations of the first and second orthogonal matrices are Householder parameterizations of the first and second orthogonal matrices.

**5.** The computer-implemented method (300) of claim 4, comprising:

receiving (408) the shape of the first/second orthogonal matrix; and
deriving a full-space orthogonal parameterization of the first/second orthogonal matrix.

**6.** The computer-implemented method (300) of any of claims 1-2, wherein the orthogonal parameterizations of the first and second orthogonal matrices are subspace orthogonal parameterizations.

**7.** The computer-implemented method (300) of claim 6, wherein the subspace orthogonal parameterizations of the first and second orthogonal matrices are Tensor Train Decomposition, TTD, parameterizations of the first and second orthogonal matrices.

8.  The computer-implemented method (300) of claim 7, comprising:

>   receiving (410) the shape of the first/second orthogonal matrix;
>   deriving (410) a shape of a tensor based on the shape of the first/second orthogonal matrix;
>   deriving (412) a list of ranks of a TTD of the tensor;
>   deriving (414) a list of shapes of TT-cores representing the tensor based on the ranks;
>   computing (416) a list of shapes of matricized TT-cores; and
>   performing (418) a full-space orthogonal parameterization of each shape from the list of shapes of the matricized TT-cores to obtain the TTD parameterization of the first/second orthogonal matrix.

9.  The computer-implemented method of any of claims 1-8, wherein training (312) the neural network comprises:

>   obtaining (702) a data sample from a dataset, the data sample including an input and an expected output of the neural network;
>   computing (704) a predicted output by applying the neural network, as parameterized by the determined parameterization, to the data sample;
>   computing (706) a loss as a discrepancy function of the expected output and the predicted output;
>   computing (708) loss gradients based on the computed loss, wherein said computing comprises computing loss gradients with respect to the learned parameters of the first layer of the neural network; and
>   updating (710) the learned parameters of the first layer using the loss gradients computed with respect to the learned parameters of the first layer.

10. The computer-implemented method (300) of claim 9, wherein computing (704) the predicted output comprises:

>   reading (802) the parameterization configurations of the first and second orthogonal matrices and of the diagonal matrix; and
>   executing (804, 806) a function expression associated with each of the parameterization configurations to obtain a plurality of orthogonal matrices and the diagonal matrix, wherein the function expression includes instructions for computing the plurality of orthogonal matrices from respective learned parameters associated with the respective parameterization configurations of the first and second orthogonal matrices.

11. The computer-implemented method (300) of claim 10, wherein the obtained plurality of orthogonal matrices corresponds to the first and second orthogonal matrices, the method comprising:

>   decompressing (812) the first weight matrix of the first layer according to $W_1 = U_1 S_1 V_1^\mathsf{T}$ , where $W_1$ denotes the first weight matrix, $U_1$ and $V_1$ denote the obtained first and second orthogonal matrices, and $S_1$ denotes the obtained diagonal matrix; and
>   computing (814) a mapping of the first layer as $y_1 = W_1 x_1 + b_1$ where $x_1$ denotes the input of the first layer based on the applied data sample and $b_1$ denotes a bias vector associated with the first layer.

12. The computer-implemented method (300) of claim 10, wherein the obtained plurality of orthogonal matrices correspond to the first and second orthogonal matrices, the method comprising:

>   computing (816) a mapping of the first layer as $y_1 = U_1\big(S_1(V_1^\mathsf{T} x_1)\big) + b_1$, where $U_1$ and $V_1$ denote the obtained first and second orthogonal matrices, and $S_1$ denotes the obtained diagonal matrix, $x_1$ denotes the input of the first layer based on the applied data sample, and $b_1$ denotes a bias vector associated with the first layer.

13. The computer implemented method (300) of claim 10, wherein the obtained plurality of orthogonal matrices correspond to matricized TT-cores of a Tensor Train Decomposition, TTD, of the first and second orthogonal matrices, the method comprising:

>   reshaping (824) the plurality of orthogonal matrices into three-dimensional TT-cores according to the parameterization configurations of the first layer;
>   constructing (826) a tensor network based on the first diagonal matrix $S_1$ and the plurality of orthogonal matrices;
>   contracting (828) the tensor network to obtain the first weight matrix; and

computing (830) a mapping of the first layer as $y_1 = W_1 x_1 + b_1$, where $W_1$ denotes the first weight matrix, $x_1$ denotes the input of the first layer based on the applied data sample, and $b_1$ denotes a bias vector associated with the layer.

14. The computer-implemented method (300) of claim 10, wherein the obtained plurality of orthogonal matrices correspond to matricized TT-cores of a Tensor Train Decomposition, TTD, of the first and second orthogonal matrices, the method comprising:

reshaping (824) the plurality of orthogonal matrices into three-dimensional TT-cores according to the parameterization configurations of the first layer;

tensorizing (832) input vector $x_1$ of the first into a tensor $X_1'$ of shape $n_1 \times \cdots \times n_2 \times n_1$ according to the parameterization configurations of the first layer;

constructing (834) a tensor network based on the diagonal matrix, the TT-cores, and the tensor $X_1'$ ;

contracting (836) the tensor network to obtain a tensorized product $y_1' = W_1' x_1'$ of shape $m_1 \times m_2 \times \cdots \times m_k$ and vectorizing the tensorized product to obtain a vector $\tilde{y}_1$ with shape $m \times 1$; and

computing (838) a mapping of the first layer as $y_1 = \tilde{y}_1 + b_1$, where $b_1$ denotes a bias vector associated with the first layer.

15. A computer program (PROG) including instructions that when executed by a processor (202) cause the processor (202) to execute a method according to any of claims 1-14.

16. A neural network obtained using the method of any of claims 1-14.

100

| | | | | |
|---|---|---|---|---|
| **102** | ↔ | **104** | ↔ | **106** |

# FIG.1

200

| **202** | ↔ | PROG<br>**204** |
|---|---|---|

# FIG.2

300

**302**

↓

**304**

↓

**306**

↓

**308**

↓

**310**

↓

**312**

# FIG.3

**400A**

Params. $W_1$ → | 402 | Shapes of $S_1, U_1, V_1$ → | 404 | Params. config. $S_1, U_1, V_1$ → | 406 | → Params. config. $W_1, \ldots, W_L$

Params. $W_L$ →

Shapes of $S_L, U_L, V_L$

Params. config. $S_L, U_L, V_L$

## FIG.4A

**400B**

↓ 420

| 408 |

↓ 422

## FIG.4B

**400C**

| 410 |

↓

| 412 |

↓

| 414 |

↓

| 416 |

↓

| 418 |

## FIG.4C

FIG.5

$$
\begin{pmatrix}
1 & 0 & 0 & \cdots & 0 & 0 & 0 & \cdots \\
h_{2,1} & 1 & 0 & \cdots & 0 & 0 & 0 & \cdots \\
h_{3,1} & h_{3,2} & 1 & \cdots & 0 & 0 & 0 & \cdots \\
h_{4,1} & h_{4,2} & h_{4,3} & \cdots & 0 & 0 & 0 & \cdots \\
\vdots & \vdots & \vdots & \ddots & \vdots & \vdots & \vdots & \ddots \\
h_{r,1} & h_{r,2} & h_{r,3} & \cdots & h_{r,r-1} & 1 & 0 & \cdots \\
h_{r+1,1} & h_{r+1,2} & h_{r+1,3} & \cdots & h_{r+1,r-1} & h_{r+1,r} & 1 & \cdots \\
\vdots & \vdots & \vdots & \ddots & \vdots & \vdots & \vdots & \ddots \\
h_{d,1} & h_{d,2} & h_{d,3} & \cdots & h_{d,r-1} & h_{d,r} & 0 & \cdots \\
0 & 0 & 0 & \cdots & 0 & 0 & 0 & \cdots \\
\vdots & \vdots & \vdots & \ddots & \vdots & \vdots & \vdots & \ddots
\end{pmatrix}
$$

Padded Householder

$$
\begin{pmatrix}
q_{1,1} & q_{1,2} & q_{1,3} & \cdots & q_{1,r-1} & q_{1,r} & \cdot & \cdots \\
q_{2,1} & q_{2,2} & q_{2,3} & \cdots & q_{2,r-1} & q_{2,r} & \cdot & \cdots \\
q_{3,1} & q_{3,2} & q_{3,3} & \cdots & q_{3,r-1} & q_{3,r} & \cdot & \cdots \\
q_{4,1} & q_{4,2} & q_{4,3} & \cdots & q_{4,r-1} & q_{4,r} & \cdot & \cdots \\
\vdots & \vdots & \vdots & \ddots & \vdots & \vdots & \vdots & \ddots \\
q_{r,1} & q_{r,2} & q_{r,3} & \cdots & q_{r,r-1} & q_{r,r} & \cdot & \cdots \\
q_{r+1,1} & q_{r+1,2} & q_{r+1,3} & \cdots & q_{r+1,r-1} & q_{r+1,r} & \cdot & \cdots \\
\vdots & \vdots & \vdots & \ddots & \vdots & \vdots & \vdots & \ddots \\
q_{d,1} & q_{d,2} & q_{d,3} & \cdots & q_{d,r-1} & q_{d,r} & \cdot & \cdots \\
\cdot & & & \cdots & & \cdot & \cdot & \cdots \\
\vdots & \vdots & \vdots & \ddots & \vdots & \vdots & \vdots & \ddots
\end{pmatrix}
$$

FIG.6

700A

702

704

706

708

710

No ← Stop condition ? → Yes 712

Exit

FIG.7A

700B

702

704

FIG.7B

**800A**

```
┌──────────┐
│   802    │
└──────────┘
      │
      ▼
┌──────────┐
│   804    │
└──────────┘
      │
      ▼
┌──────────┐
│   806    │
└──────────┘
      │
      ▼
┌──────────┐
│   808    │
└──────────┘
```

# FIG.8A

**800B**

```
┌──────────┐
│   810    │
└──────────┘
      │
      ▼
┌──────────┐
│   812    │
└──────────┘
      │
      ▼
┌──────────┐
│   814    │
└──────────┘
```

# FIG.8B

**800C**

```
┌──────────┐
│   810    │
└──────────┘
      │
      ▼
┌──────────┐
│   816    │
└──────────┘
```

# FIG.8C

800D

818

True    820    False

800B      800C

# FIG.8D

800E

822

824

826

$$1 - (U'_1) - (U'_2) - \cdots - (U'_k) \overset{r}{-} (S_1) \overset{r}{-} (V'_\ell) - \cdots - (V'_2) - (V'_1) - 1$$

$m_1$    $m_2$    $m_K$    $n_\ell$    $n_2$    $n_1$

828

830

# FIG.8E

30

**800F**

822

↓

824

↓

832

↓

834

$$\frac{1}{}\quad (U'_1)-(U'_2)-\cdots-(U'_k)\ \ r\ (S_1)\ r\ (V'_\ell)\ \cdots\ (V'_2)-(V'_1)\quad \frac{1}{}$$

$m_1 \quad m_2 \quad\quad m_K \quad\quad n_\ell \quad\quad n_2 \quad n_1$

X'

↓

836

↓

838

## FIG.8F

**800G**

840

↓

842

False ← → True

800F          800E

## FIG.8G

Europäisches
Patentamt

European
Patent Office

Office européen
des brevets

# EUROPEAN SEARCH REPORT

Application Number

EP 20 21 3178

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YANG XIN ET AL: "Compressing Deep Models using Multi Tensor Train Decomposition", 2019 INTERNATIONAL CONFERENCE ON CONTROL, AUTOMATION AND INFORMATION SCIENCES (ICCAIS), IEEE, 23 October 2019 (2019-10-23), pages 1-6, XP033761014, DOI: 10.1109/ICCAIS46528.2019.9074612 [retrieved on 2020-04-20] * page 1 - page 6, left-hand column, paragraph 3 * | 1-16 | INV. G06N3/08  ADD. G06N3/063 |
| A | WANG DINGHENG ET AL: "Compressing 3DCNNs based on tensor train decomposition", NEURAL NETWORKS, ELSEVIER SCIENCE PUBLISHERS, BARKING, GB, vol. 131, 7 August 2020 (2020-08-07), pages 215-230, XP086281966, ISSN: 0893-6080, DOI: 10.1016/J.NEUNET.2020.07.028 [retrieved on 2020-08-07] * the whole document * | 1-16 | |
| A,D | TIMUR GARIPOV ET AL: "Ultimate tensorization: compressing convolutional and FC layers alike", ARXIV.ORG, CORNELL UNIVERSITY LIBRARY, 201 OLIN LIBRARY CORNELL UNIVERSITY ITHACA, NY 14853, 10 November 2016 (2016-11-10), XP080730732, * the whole document * | 1-16 | TECHNICAL FIELDS SEARCHED (IPC)  G06N |

-/--

The present search report has been drawn up for all claims

| Place of search | Date of completion of the search | Examiner |
|---|---|---|
| The Hague | 31 May 2021 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 20 21 3178

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | JIONG ZHANG ET AL: "Stabilizing Gradients for Deep Neural Networks via Efficient SVD Parameterization", ARXIV.ORG, CORNELL UNIVERSITY LIBRARY, 201 OLIN LIBRARY CORNELL UNIVERSITY ITHACA, NY 14853, 25 March 2018 (2018-03-25), XP080858992, * the whole document * | 1-16 | |
| A | US 2019/122108 A1 (KLIEGL MARKUS [US] ET AL) 25 April 2019 (2019-04-25) * the whole document * | 1-16 | |
| A | US 2019/332941 A1 (TOWAL REGAN BLYTHE [US] ET AL) 31 October 2019 (2019-10-31) * the whole document * | 1-16 | |

**TECHNICAL FIELDS SEARCHED     (IPC)**

The present search report has been drawn up for all claims

| Place of search | Date of completion of the search | Examiner |
|---|---|---|
| The Hague | 31 May 2021 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 21 3178

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2021

| Patent document cited in search report | | Publication date | Patent family member(s) | | Publication date |
|---|---|---|---|---|---|
| US 2019122108 | A1 | 25-04-2019 | CN | 109785826 A | 21-05-2019 |
| | | | US | 2019122108 A1 | 25-04-2019 |
| US 2019332941 | A1 | 31-10-2019 | CN | 112005250 A | 27-11-2020 |
| | | | EP | 3785176 A1 | 03-03-2021 |
| | | | US | 2019332941 A1 | 31-10-2019 |
| | | | WO | 2019209658 A1 | 31-10-2019 |

EPO FORM P0459

For more details about this annex : see Official Journal of the European Patent Office, No. 12/82

**EP 4 012 624 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GARIPOV.** Ultimate tensorization: compressing convolutional and FC layers alike. *arXiv:1611.03214,* 2016
- **ZHANG et al.** Stabilizing Gradients for Deep Neural Networks via Efficient SVD Parameterization. *arXiv:1803.09327,* 2018
- **OSELEDETS.** *Tensor-Train Decomposition,* 2011
- **DOLGOV.** *Computation of Extreme Eigenvalues in Higher Dimensions Using Block Tensor Train Format,* 2013